# EUROPEAN PATENT SPECIFICATION

(11) **EP 4 469 350 B1**
(45) Date of publication and mention of the grant of the patent: **08.04.2026**
(21) Application number: 23702405.4
(22) Date of filing: 24.01.2023
(51) Int. Cl.: B64D 35/00, B64C 11/00, F16F 9/48, F16F 9/14, F16F 15/16

(54) **AIRCRAFT PROPELLER DRIVE SYSTEM**
PROPELLERANTRIEBSSYSTEM FÜR FLUGZEUGE
SYSTÈME D'ENTRAÎNEMENT D'HÉLICE D'AVION

(30) Priority: 28.01.2022 US 202263304137 P
(43) Date of publication of application: 04.12.2024
(73) Proprietor: BRP-Rotax GmbH & Co. KG, 4623 Gunskirchen (AT)
(72) Inventor: MITTERMAIER, Harald, 4926 St. Marienkirchen am Hausruck (AT); DOPONA, Michael, 4550 Bad Hall (AT)
(74) Representative: Murgitroyd & Company
(86) International application number: PCT/EP2023/051712
(87) International publication number: WO 2023/144157

(56) References cited:
- US-A- 1 965 742
- US-A- 2 738 660
- US-A1- 2003 089 822
- US-A1- 2021 277 975

## Description

### FIELD OF TECHNOLOGY

The present technology relates to aircraft propeller drive systems.

### BACKGROUND

Many airplanes are powered by one or more propellers driven by one or more intermittent combustion internal combustion engines, such as two-stroke or four-stroke internal combustion engines. In many such airplanes, during operation, the engine turns its corresponding propeller at a constant speed, which is commonly referred to as a constant-speed propeller. In order to address the changes in power requirements, the pitch of the propeller blades of the propeller is changed instead of changing the speed of the engine.

Each engine is connected to its corresponding propeller via a propeller drive system. The propeller drive system typically includes a plurality of gears arranged such that the propeller turns at a slower speed than a crankshaft of the engine.

Due to its mass and dimensions, the propeller has a high moment of inertia. Therefore, when the propeller turns during operation of the airplane, it tends to do so at a constant speed. On the other hand, the speed of rotation of the crankshaft of the engine varies. The speed of rotation of the crankshaft increases during power strokes of the engine and decreases during compression strokes of the engine. As a result, the portion of the propeller drive system that is connected to the propeller rotates at a constant speed, but the portion of the propeller drive system that is connected to the crankshaft of the engine varies in speed. This causes stress and wear of the gears in the propeller drive system and also causes noise and vibration.

Also, should resonance of the propeller drive system occur, the vibrations increase and the problems associated with these vibrations are exacerbated. In order to avoid resonance during most operating conditions, some propeller drive systems are designed with a stiffness that results in a resonance frequency that occurs at a speed of rotation that is below the idle speed of the engine. Therefore, during the normal operation range of the engine, which is at idle speed and higher, resonance of the propeller drive system should not occur. However, during engine start-up, the engine goes from rest to the idle speed of the engine, and as such at some point will turn at the speed that causes resonance of the propeller drive system. As such, during engine start-up, resonance of the propeller drive system occurs, which causes strong vibrations and may even cause the crankshaft to rotate backwards momentarily. As a result, the engine control unit that is responsible for the control of the fuel injection and ignition, among other things, may receive erroneous signals regarding the speed of rotation and position of the crankshaft, which could prevent successful engine start-up.

There is therefore a need for a propeller drive system that can dampen the torque peaks associated with the changes in speed of the crankshaft during operation of the engine and/or can avoid or reduce the impact of resonance of the propeller drive system during start-up of the engine.
US2003/0089822 discloses an internal combustion engine for an aircraft. The internal combustion engine includes a crankshaft defining first and second ends, a propeller, and a transmission disposed between the first end of the crankshaft and the propeller, operatively connecting the propeller to the crankshaft. A torsion bar is disposed between the first end of the crankshaft and the transmission, operatively connecting the crankshaft to the transmission. A torsional vibration damper is operatively connected at one of the first and the second ends of the crankshaft.
US2021/0277975 discloses a method for determining a torsional moment acting on a component in a drive train of an aircraft using at least one sensor, where the determined torsional moment is used for adjusting at least one adjustable damping element located in or on the component and/or for regulating a torsional stiffness in the torque-conducting component.
US2,738,660 discloses a system having a hollow shaft adapted to be rotatably driven by a pulsating power source, a flexible quill shaft extending axially inside the hollow shaft, the quill shaft having a direct driving connection at its input end to a member directly driven by the pulsating source, the quill shaft being provided near its other end with external radial splines arranged to loosely mate with internal radial splines in the hollow shaft with appreciable rotational clearance to constitute the sole driving connection between the shafts and hydraulic fluid interposed in the cavities between the loosely mating splines to provide a fluid damper for suppressing vibrations in the quill shaft.
US1965742 discloses a driving mechanism for an aircraft including the propeller of the aircraft, whereby variations in the angular velocity of driving means are equalized by providing a resilient member, such as a resilient shaft, between the driving means and a driven member.

### SUMMARY

It is an object of the present technology to ameliorate at least some of the inconveniences present in the prior art.

According to one aspect of the present technology, there is provided an aircraft propeller drive system for an aircraft according to claim 1.

In some embodiments, the hydraulic damper has: a housing; a hub disposed in the housing, the hub being rotatable relative to the housing; and hydraulic fluid in a volume defined between the housing and the hub; one of the housing and the hub is rotationally fixedly connected to the first end of the torsion bar; and an other of the housing and the hub is rotationally fixedly connected to the output shaft.

In some embodiments, the housing is rotationally fixedly connected to the first end of the torsion bar; and the hub is rotationally fixedly connected to the output shaft.

In some embodiments, the aircraft propeller drive system also has a clutch. The clutch has: a driving member adapted to be operatively connected to and driven by the engine; and a driven member rotationally fixed to the first end of the torsion bar. The first end of the torsion bar is operatively connected to and driven by the engine via the clutch.

In some embodiments, the housing is rotationally fixedly connected to the driven member of the clutch; and is rotationally fixedly connected to the first end of the torsion bar via the driven member.

In some embodiments, the clutch is a slip friction clutch.

In some embodiments, a hollow shaft connects the driven member of the clutch to the first end of the torsion bar. The torsion bar is disposed at least partially inside the hollow shaft.

In some embodiments, torsion bar, the output shaft, the hydraulic damper and the clutch are coaxial.

In some embodiments, the housing of the hydraulic damper has a plurality of internal arms extending radially inward; the hub has a plurality of external arms extending radially outward; the external arms are disposed between the internal arms; and a plurality of main chambers are defined between the external arms and the internal arms.

In some embodiments, each external arm of the plurality of external arms defines: an intermediate chamber; a first aperture in a first side of the external arm at a front of the first side, the first aperture fluidly connecting a first main chamber of the plurality of main chambers with the intermediate chamber, the first main chamber being adjacent to the first side of the external arm; and a second aperture in a second side of the of the external arm at a rear of the second side, the second aperture fluidly connecting a second main chamber of the plurality of main chambers with the intermediate chamber, the second main chamber being adjacent to the second side of the external arm. For each external arm: a piston is disposed in the intermediate chamber axially between the first and second aperture. In response to rotation of the hub in a first direction relative to the housing: hydraulic fluid flowing from the first main chamber into the intermediate chamber via the first aperture; the piston moving rearward; and hydraulic fluid flowing from the intermediate chamber into the second main chamber via the second aperture. In response to rotation of the hub in a second direction relative to the housing: hydraulic fluid flowing from the second main chamber into the intermediate chamber via the second aperture; the piston moving forward; and hydraulic fluid flowing from the intermediate chamber into the first main chamber via the first aperture.

In some embodiments, for each external arm, in response to rotation of the hub in the first direction relative to the housing and in response to the piston reaching a rear stop position: flow of hydraulic fluid into and out of the intermediate chamber stopping or reducing; and hydraulic fluid flowing from the first main chamber to the second main chamber via at least one gap between the external arm and the housing, thereby increasing a degree of damping of the hydraulic damper. For each external arm, in response to rotation of the hub in the second direction relative to the housing and in response to the piston reaching a front stop position: flow of hydraulic fluid into and out of the intermediate chamber stopping or reducing; and hydraulic fluid flowing from the second main chamber to the first main chamber via the at least one gap between the external arm and the housing, thereby increasing the degree of damping of the hydraulic damper.

In some embodiments, for each external arms: two springs are disposed in the intermediate chamber, the piston being disposed between the two spring, and the two springs biasing the piston toward a middle of the intermediate chamber.

In some embodiments, in response to relative rotation between the housing and the hub, hydraulic fluid flows between the main chambers by flowing through gaps between the external arms and the housing.

In some embodiments, the hydraulic damper further comprises a variable volume chamber fluidly connected to the volume defined between the housing and the hub.

In some embodiments, the output shaft is at least partially hollow; the torsion bar is disposed at least partially inside the output shaft; and the output shaft and the torsion bar are coaxial.

In some embodiments, a first gear is adapted to be operatively connected to and is driven by the engine, the first gear having a first plurality of teeth; and a second gear is operatively connected to and drives the first end of the torsion bar, the second gear having a second plurality of teeth; the second plurality of teeth engaging the first plurality of teeth, the first gear driving the second gear, the second gear having a larger diameter than the first gear.

According to another aspect of the present technology, there is provided a method according to claim 15.

For purposes of the present application, the term "intermittent combustion internal combustion engine" refers to an engine which operates as a result of the periodic combustion of air and fuel, such as in a two-stroke, four-stroke or Wankel rotary engine. Also for purposes of the present application, terms related to spatial orientation such as forward, rearward, left and right are as they would be understood by a pilot of an aircraft sitting in the aircraft in a normal piloting position with the aircraft being at 0 degree of pitch and 0 degree of roll.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a left side view of an airplane;
Figure 2 is a schematic right side elevation view of an engine, propeller drive system and propeller of the airplane of Fig. 1;
Figure 3 is a perspective view taken from a front, right side of the engine of Fig. 1;
Figure 4 is a perspective view taken from a rear, right side of the propeller drive system of Fig. 2;
Figure 5 is a perspective view taken from a front, right side of the propeller drive system of Fig. 4;
Figure 6 is a cross-sectional view of the propeller drive system of Fig. 4 taken through a vertically and longitudinally extending center plane of the propeller drive system of Fig. 4;
Figure 7 is a perspective view taken from a front, right side of a hydraulic damper of the propeller drive system of Fig. 4;
Figure 8 is a perspective view taken from a rear, right side of the hydraulic damper of Fig. 7;
Figure 9 is a partially exploded view of the hydraulic damper of Fig. 7;
Figure 10 is a cross-sectional view of the hydraulic damper of Fig. 7 taken through line 10-10 of Fig. 13;
Figure 11 is a cross-sectional view of the hydraulic damper of Fig. 7 taken through line 11-11 of Fig. 13;
Figure 12 is a cross-sectional view of the hydraulic damper of Fig. 7 taken through line 12-12 of Fig. 10;
Figure 13 is a cross-sectional view of the hydraulic damper of Fig. 7 taken through line 13-13 of Fig. 10;
Figure 14 is a cross-sectional view of the hydraulic damper of Fig. 7 taken through an inclined plane passing through line 14-14 of Fig. 12;
Figure 15 is a rear elevation view of a front cover of a housing of the hydraulic damper of Fig. 7;
Figure 16 is a perspective view of a piston assembly of the hydraulic damper of Fig. 7;
Figure 17 is a cross-sectional view of the hydraulic damper of Fig. 7 taken through line 13-13 of Fig. 10 with the hydraulic damper in a maximum thrust position;
Figure 18 is a cross-sectional view of the hydraulic damper of Fig. 7 taken through line 18-18 of Fig. 10 with the hydraulic damper in the maximum thrust position, and with the springs of the piston assembly removed for clarity;
Figure 19 is a cross-sectional view of the hydraulic damper of Fig. 7 taken through line 13-13 of Fig. 10 with the hydraulic damper in a maximum drag position; and
Figure 20 is a cross-sectional view of the hydraulic damper of Fig. 7 taken through line 18-18 of Fig. 10 with the hydraulic damper in the maximum drag position, and with the springs of the piston assembly removed for clarity.

### DETAILED DESCRIPTION

The present technology will be described with respect to an airplane having a single variable pitch propeller powered by an intermittent combustion internal combustion engine. It is contemplated that at least some aspects of the present technology could be applied to an airplane having a fixed pitch propeller and/or having multiple propellers and/or in a different type of aircraft.

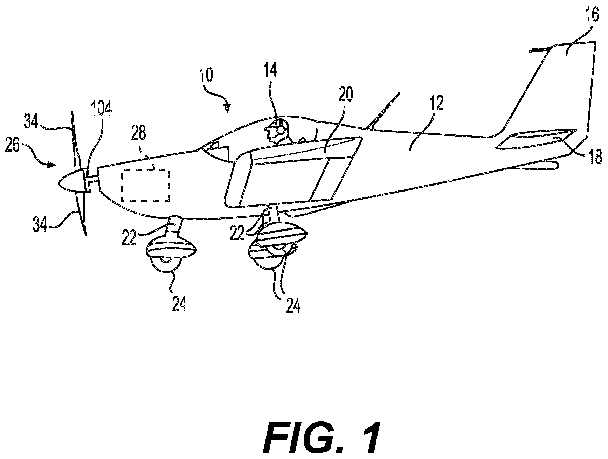

As can be seen in Fig. 1, an aircraft, specifically an airplane 10, has a fuselage 12 defining a cockpit 14 for accommodating a pilot. It is contemplated that the fuselage 12 and the cockpit 14 could be designed to also accommodate one or more passengers. A vertical stabilizer 16 is connected to the rear end of the fuselage 12. A pair of horizontal stabilizers 18 (only the left one being shown) is connected to the vertical stabilizer 16. A pair of wings 20 (only the left one being shown) is connected to the bottom of the fuselage 12. It is contemplated that the wings 20 could be connected to the top or the sides of the fuselage 12. It is also contemplated that airplane 10 could have more than two wings 20 and/or that the wings 20 could be integrally formed with the fuselage 12. Three landing gears 22 are provided on the bottom of the fuselage 12. In the present embodiment, the landing gears 22 are provided with wheels 24 and are not retractable. It is contemplated that other types of landing gears 22 could be used. For example, the wheels 24 could be replaced with skis, skids or floats and/or the landing gears 22 could be retractable. A variable pitch propeller 26 is provided at the front of the fuselage 12. It is contemplated that the airplane 10 could have two or more propellers 26 and/or that the propeller(s) 26 could be provided on the wings 20 or elsewhere on the airplane 10. It is also contemplated that the propeller 26 could be a fixed pitch propeller 26. The engine 28 (schematically shown in Fig. 1) powering the propeller 26 is located in and connected to the front of the fuselage 12. The airplane 10 has many other components, but these will not be described herein.

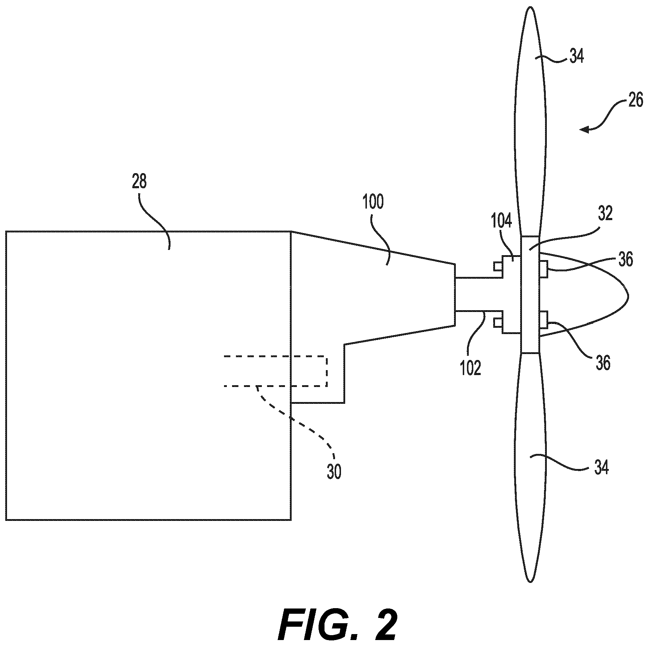

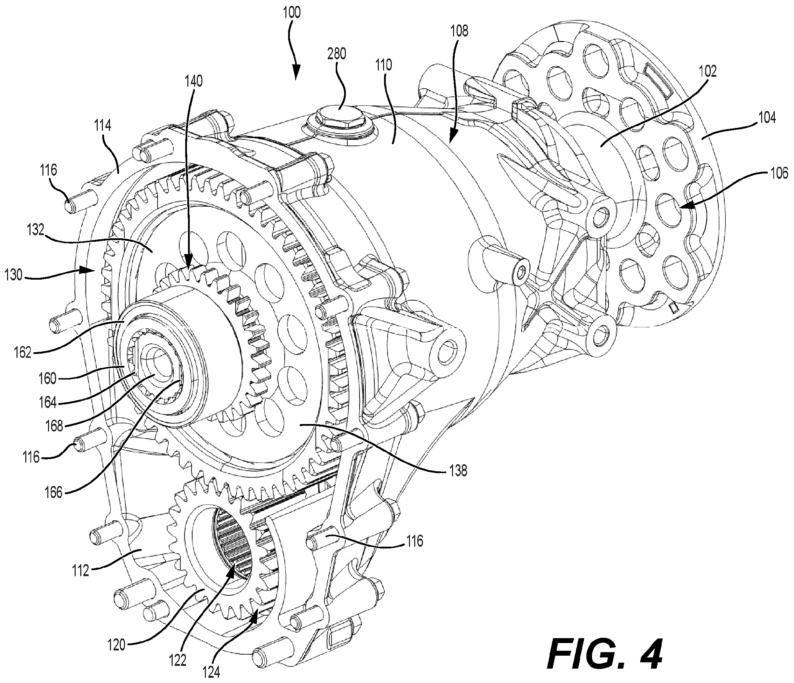

As can be seen in Fig. 2, the propeller 26 is driven by the engine 28 via a propeller drive system 100. The engine 28 has a crankshaft 30 (schematically shown in Fig. 2), that drives the propeller drive system 100. The propeller drive system 100 has an output shaft 102 defining a propeller mounting flange 104. As can be seen in Fig. 1, the flange 104 is located outside the fuselage 12. The propeller mounting flange 104 defines a plurality of holes 106 (see Fig. 4). The propeller 26 has a central hub 32 from which the propeller blades 34 extend. The central hub 32 defines holes (not shown) corresponding to at least some of the holes 106 in the propeller mounting flange 104. Fasteners 36 are inserted through the holes in the central hub 32 of the propeller 26 and through the hole 106 of the flange 104 to fasten the propeller 26 to the flange 104.

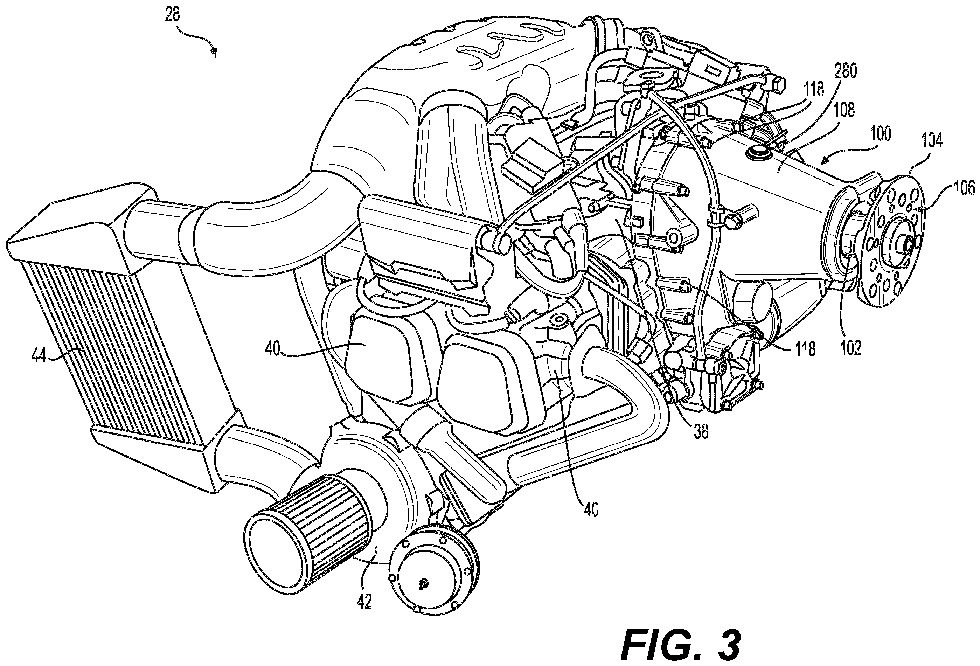

The engine 28 is best seen in Fig. 3. The engine 28 is an intermittent combustion internal combustion engine. In the present embodiment, the engine is a fuel injected, four-stroke boxer engine 28, such as the Rotax 915 iS^{™} for example. Other types of intermittent combustion internal combustion engines are contemplated, such as, but not limited to, V-type engines, two-stroke engine, and Wankel rotary engines. The engine 28 has a central crankcase 38 and four horizontally extending cylinders 40 (two on each side). The crankshaft 30 is rotationally supported in and extends from the crankcase 38. The reciprocating motion of the pistons (not shown) inside the cylinders 40 rotate the crankshaft 30. The engine 28 is also provided with a turbocharger 42 and an intercooler 44, but it is contemplated that these components could be omitted. The engine 28 has many other components, but these will not be described herein.

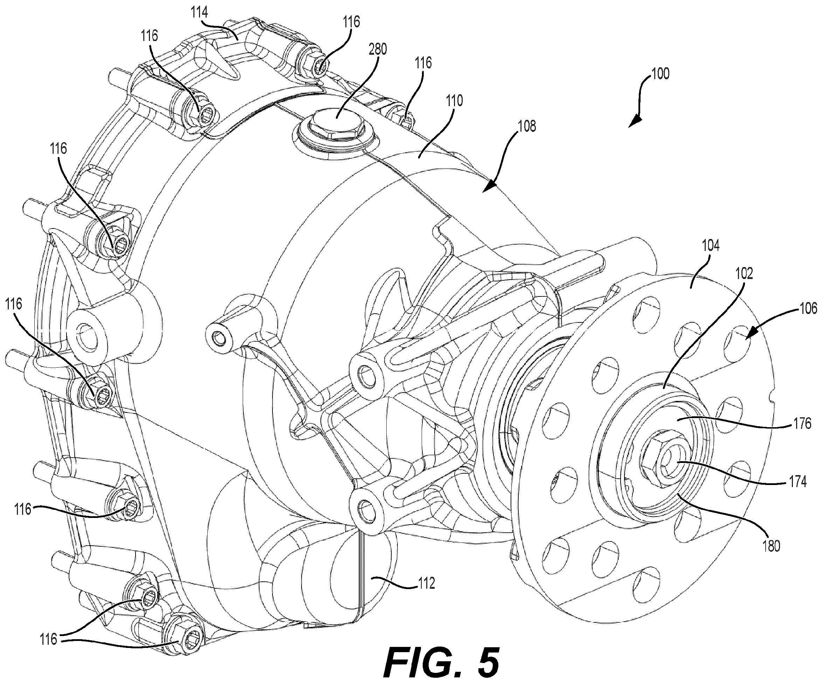

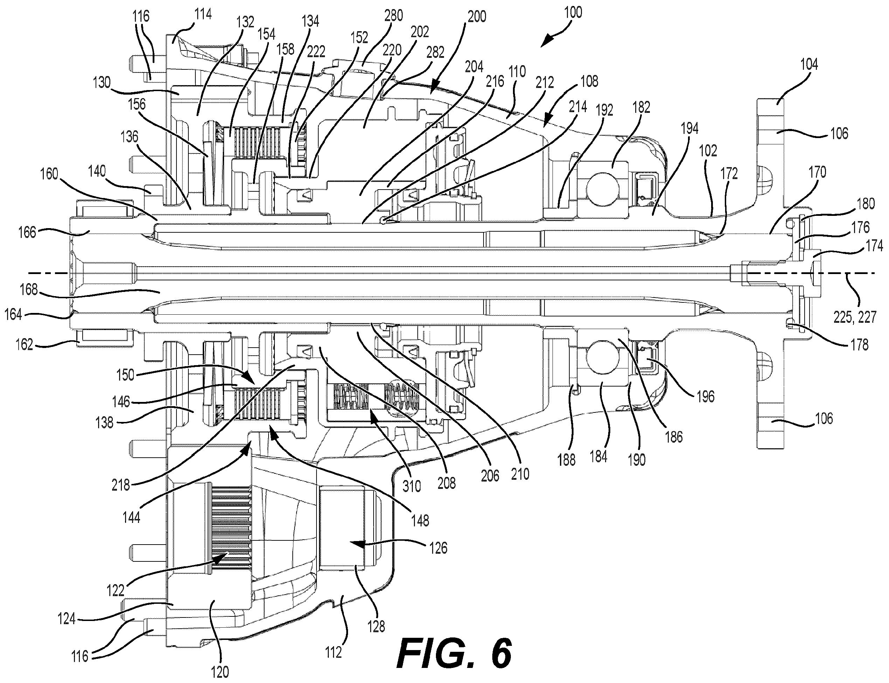

Turning now to Figs. 4 to 6, the propeller drive system 100 will be described in more detail. The propeller drive system 100 has a housing 108 inside which most of the components described below are housed. The housing 108 has an upper generally frustoconical portion 110 and a lower generally frustoconical portion 112 that is integrally formed with the upper portion 110. As can be seen, the lower portion 112 is smaller than the upper portion 110. As best seen in Fig. 6, the output shaft 102 extends from a front of the upper portion 110 of the housing 108. The rear end of the housing 108 defines a flange 114. The flange 114 defines a plurality of apertures through which fasteners 116 (only some of which are labeled for clarity) are inserted to fasten the housing 108, and therefore the propeller drive system 100, to the front of the engine 28 as shown in Fig. 3.

The propeller drive system 100 has an input gear 120 located in the lower portion 112 of the housing 108. The input gear 120 has internal splines 122 and a plurality of external teeth 124. The crankshaft 30 extends through the input gear 120. The crankshaft 30 has external splines that engage the internal splines 122 of the input gear 120 such that the crankshaft 30 drives the input gear 120. The end of the crankshaft 30 is received in a recess 126 formed in the lower portion 112 of the housing 108. A bearing 128 is disposed around the end of the crankshaft 30 to rotationally support the end of the crankshaft in the recess 126.

The plurality of external teeth 124 of the input gear 120 engages a plurality of external teeth 130 of a gear 132 such that the input gear 120 drives the gear 132. As can be seen, the gear 132 has a larger diameter than the input gear 120. The gear 132 defines an outer sleeve 134 and an inner sleeve 136. A body or web 138 of the gear extends radially between the sleeves 134, 136. A rear end of the inner sleeve 136 defines a plurality of external teeth 140. The plurality of external teeth 140 engage the teeth of a gear (not shown) connected to a governor (not shown).

With reference to Fig. 6, the propeller drive system 100 also has a slip friction clutch 144. In the present embodiment, the slip friction clutch 144 is a multiple-disk friction clutch, but it is contemplated that other types of friction clutches could be used. The friction clutch 144 has a driving member formed by the outer sleeve 134 of the gear 132, a driven member 146, driving friction disks 148, driven friction disks 150, a front annular plate 152, and a rear annular plate 154. The driving and driven friction disks 148, 150 are disposed in an alternating arrangement between the front and rear annular plates 152, 154. The driving friction disks 148 are rotationally fixed to the outer sleeve 134. The driven friction disks 150 are rotationally fixed to the driven member 146. A spring 156 is disposed radially between the outer and inner sleeves 134, 136 of the gear 132 and axially between the web 138 of the gear 132 and the rear annular plate 154. The spring 156 applies pressure onto the clutch 144 to compress the driving and driven friction disks 148, 150. When the torque applied to the clutch 144 is less than a slip torque of the clutch 144, the outer sleeve 134 of the gear 132 and the driven member 146 rotate together. The clutch 144 and spring 156 are designed and selected such that the clutch 144 has a slip torque that is sufficiently high so that during normal operation of the airplane 10, the clutch 144 does not slip and the outer sleeve 134 and the driven member 146 rotate together. Should the torque applied to the clutch 144 exceed the slip torque of the clutch 144, the driving and driven friction disks 148, 150 slip relative to each other and the outer sleeve 134 and the driven member 146 no longer rotate together. For example, should the propeller 34 hit the ground during a difficult landing, the torque applied to the clutch 144 exceeds the slip torque of the clutch 144, causing the clutch 144 to slip, thereby preventing the force of the impact to be transferred to the engine 28, thus helping to prevent damage to the engine 28. In one embodiment, the slip torque of the clutch 144 is 600 Nm, but other slip torques are contemplated.

The driven member 146 of the clutch 144 is integrally formed with a flange 158 of a hollow shaft 160. The inner sleeve 136 of the gear 132 is disposed around the shaft 160, but is not fixed to the shaft 160. From the flange 158, the shaft 160 extends rearward and out of the rear of the housing 108. The rear end of the shaft 160 is rotationally supported by a bearing 162. The bearing 162 is supported inside a recess (not shown) formed in the front of the engine 28. The rear end of the shaft 160 has internal splines 164. The internal splines 164 engage external splines 166 of a rear end of a torsion bar 168. As can be seen, the torsion bar 168 is hollow. From its rear end, the torsion bar 168 extends forward and out the front of the housing 108. The front end of the torsion bar 168 has external splines 170. The external splines 170 engage internal splines 172 defined in the front end of the output shaft 102. As can be seen, the output shaft 102 is hollow. The output shaft 102 extends rearward around the torsion bar 168 and into the shaft 160. The shaft 160 is disposed around the output shaft 102 but is not fixed to the output shaft 102. A fastener 174 fastens a washer 176 to the front end of the torsion bar 168. An O-ring 178 is held between the washer 176 and the output shaft 102. A clip 180 is inserted in the output shaft 102 in front of the washer 176. As a result, the output shaft 102 and the torsion bar 168 are axially fixed to each other. The output shaft 102 is rotationally supported by a ball bearing 182 located in the front portion of the upper portion 110 of the housing 108. The bearing 182 has an outer race 184 and an inner race 186. The outer race 184 is held between a lock ring 188 and a step 190 formed in the upper portion 110 of the housing 108. The inner race 186 is held between a screw nut 192 threaded onto the output shaft 102 and a flange 194 formed by the output shaft 102. As a result of the arrangement, the bearing 182 and its associated components (188, 190, 192, 194) limit the axial displacement of the output shaft 102. A bearing seal 196 is disposed in front the bearing 182 and is held radially between the step 190 and the flange 194.

The propeller drive system 100 also has a hydraulic damper 200. The hydraulic damper 200 has a housing 202 and a hub 204 disposed in the housing 202 The hub 204 is rotationally fixed to the output shaft 102. The housing 202 and the hub 204 can rotate relative to each other. A volume defined between the hub 204 and the housing 204 is filled with hydraulic fluid. As will be described below, this constructions dampens the relative rotation between the housing and the hub 204 for at least some angles of relative rotation between the housing 200 and the hub 204.

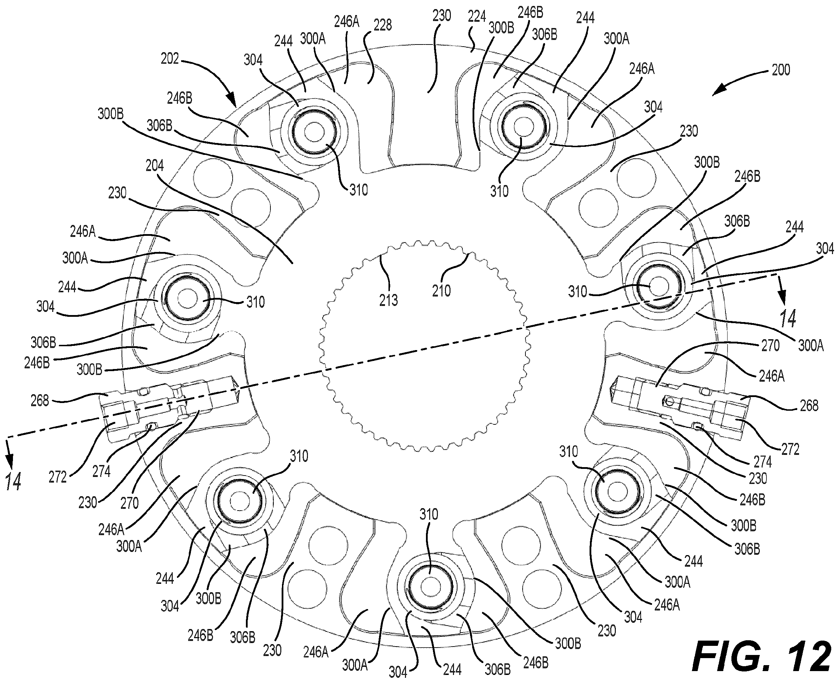

The hub 204 has an inner sleeve 206 and a middle sleeve 208. The inner sleeve 206 is rotationally fixed to the output shaft 102 via inner splines 210 that engage outer splines 212 of the output shaft 102 . To properly align the hub 204 with the output shaft 102, one of the inner splines 210 (i.e. spline 213, Fig. 12) is wider than the other splines 210 and is received in a wider gap (not shown) defined between two of the outer splines 212 of the output shaft 102. A ring 214 is disposed radially between a flared front end of the inner sleeve 206 and the output shaft 102 to limit axial displacement of the hydraulic damper 200. The middle sleeve 208 is disposed rearward of the inner sleeve 206. The middle sleeve 208 is radially spaced from the output shaft 102. A forward portion of the hollow shaft 160 is disposed radially between the middle sleeve 208 of the hub 204 and the output shaft 102. The hub 204 also has an outer sleeve 216 that extends forward of the inner sleeve 206. The middle sleeve 208 is radially between the inner sleeve 206 and the outer sleeve 216.

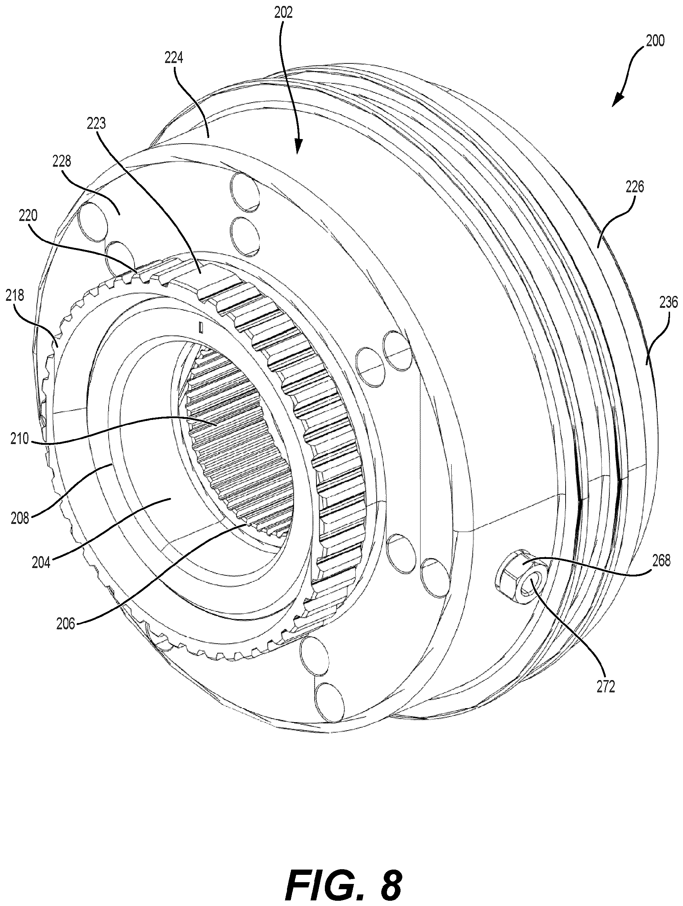

The housing 202 has a rear sleeve 218 disposed inside the front portion of the driven member 146. The rear sleeve 218 has a plurality of outer splines 220 (see Fig. 8) which selectively engage the plurality of inner splines 222 of the driving member 146, thereby rotationally fixing the rear sleeve 218 to the driven member 146. To properly align the housing 202 with the driving member 146, one of the outer splines 220 (i.e. spline 223, Fig. 8) is wider than the other splines 220 and is received in a wider gap (not shown) defined between two of the inner splines 222 of the driving member 146. It is contemplated that instead of being rotationally fixed to the driven member 146, the housing 202 could be rotationally fixed to the hollow shaft 160.

It is contemplated that in some embodiments, the hub 204 could be rotationally fixed to the driven member 146 or the shaft 160 and the housing 202 could be rotationally fixed to the output shaft 102.

As best seen in Fig. 6, the output shaft 102, the gear 132, the clutch 144, the torsion bar 168, and the hydraulic damper 200 are coaxial and rotate about a rotation axis 225. As will be discussed below, the torsion bar 168 twists when the engine 28 drives the propeller 26. When the torsion bar 168 twists, the front end of the torsion bar 168 rotates relative to the rear end of the torsion bar 168 about a torsion axis 227, which corresponds to the rotation axis 225.

When the propeller 26 turns during operation of the airplane 10, it tends to do so at a constant speed, but the speed of rotation of the crankshaft 30 of the engine 28 varies. The speed of rotation of the crankshaft 30 increases during power strokes of the engine 28 and decreases during compression strokes of the engine 28. As a result, the output shaft 102 rotates at a constant speed, but the input gear 120 varies in speed. The torsion bar 168 contributes to diminish the stress and wear of the propeller drive system 100.

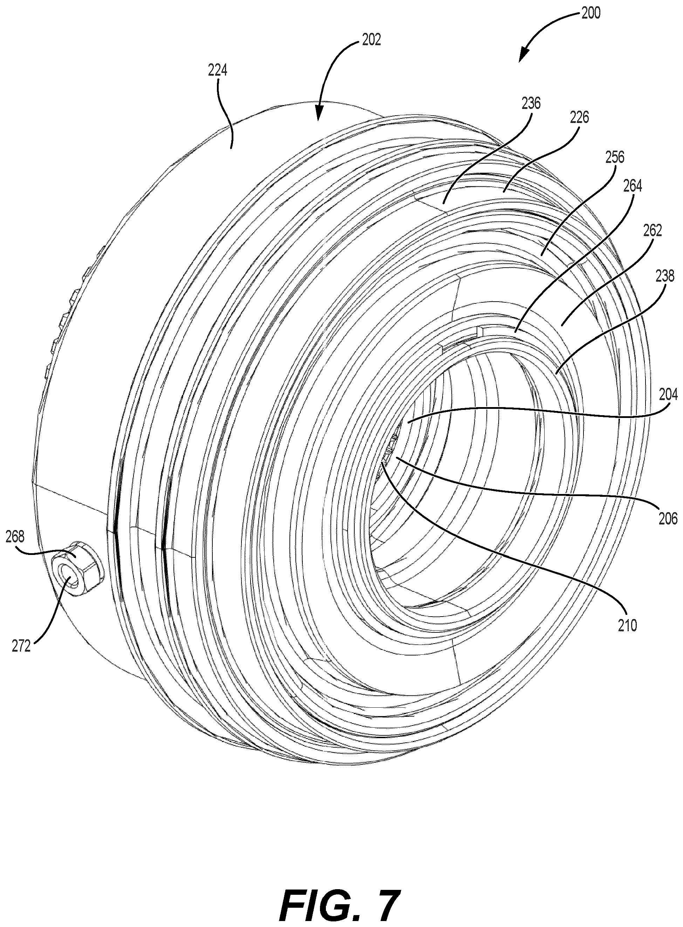

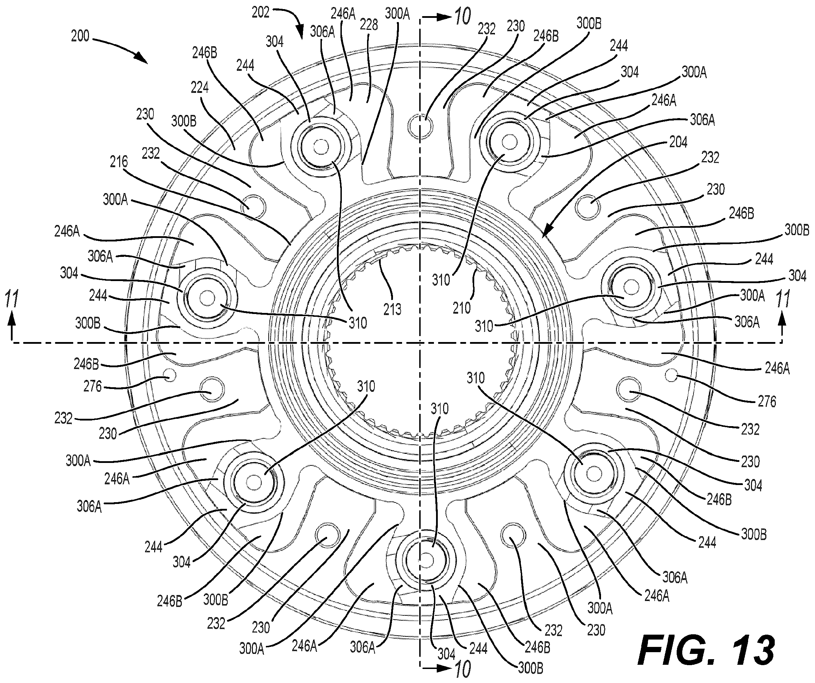

When the engine 28 is operating at full power, the crankshaft 30 drives the input gear 120, the input gear 120 drives the gear 132, the gear 132 drive the torsion bar 168 via the clutch 144 which does not slip, the torsion bar 168 drives the output shaft 102, and the output shaft 102 drives the propeller 26. Under such operating conditions, the front end of the torsion bar 168 rotates (i.e. twists) relative to the rear end of the torsion bar 168 by a varying torsion angle, due to the torque variations of the engine 28. As the hydraulic damper 200 is connected between the output shaft 102 and the inner member 146 of the clutch 144, the housing 202 and the hub 204 of hydraulic damper 200 rotate relative to each other, but as the variations in torsion angle of the torsion bar are small, the relative rotation of the housing 202 and the hub 204 is small and the hydraulic damper 200 is constructed to provide no or very little damping of the variations in torsion angle, as will be described in more detail below. The hydraulic damper 200 is constructed to provide torsional damping when the variations in torsion angle of the torsion bar 168 are larger as will be described. This occurs during engine acceleration and deceleration such as during engine start-up and shutdown. However, it is contemplated that in some embodiments the hydraulic damper 200 could be constructed to provide torsional damping for all variations in torsion
Turning now to Figs. 7 to 20, the hydraulic damper 200 will be described in more detail.

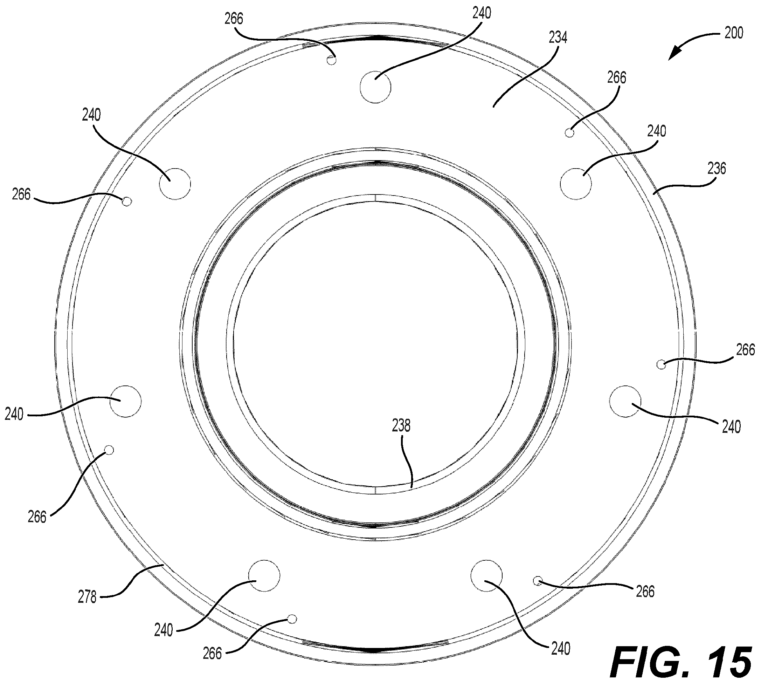

The housing 202 has a main housing portion 224 and a front cover 226. The main housing portion 224 has an annular rear side 228 from which the sleeve 218 extends rearward. The main housing portion 224 also has seven internal arms 230 that extend radially inward. Each arm 230 defines a threaded aperture 232. The front cover 226 has annular body 234, an outer sleeve 236 extending forward from an outer diameter of the body 234 and an inner sleeve 238 extending forward and rearward from an inner diameter of the body 234. The body 234 defines seven apertures 240 (best seen in Fig. 15). Seven threaded fasteners 242 are inserted in the apertures 232, 240 to fasten the front cover 226 to the main housing portion 224. The front cover 226 will be described in more detail below.

The hub 204 has seven external arms 244 extending radially outward from the outer sleeve 216. As can be seen in Fig. 12 for example, the external arms 244 are received between the internal arms 230 of the housing 202. The external arms 244 are disposed axially between the annular rear side 228 of the main housing portion 224 and the annular body 234 of the front cover 226. The volumes defined between the internal and external arms 230, 244 are referred to herein as main chambers 246A, 246B. The chambers 246A are disposed on one side of their respective external arms 244 and the chambers 246B are disposed on the opposite side of their respective arms 244. The main chambers 246A, 246B are filled with hydraulic fluid. As the present embodiment of the hydraulic damper 200 has seven internal arms 230 and seven external arms 244, fourteen main chambers 246A, 246B total (i.e. seven main chambers 246A and seven main chambers 246B) are defined. It is contemplated that the hydraulic damper 200 could have more or less than seven external arms 244, in which case there would be the same number of internal arms 230 and twice that number of main chambers 246A, 246B in total would be defined. For example, in one exemplary embodiment, it is contemplated that the hydraulic damper 200 could have six external arms 244, six internal arms 230 and twelve main chambers 246A, 246B in total. The hub 204 will be described in more detail below. With reference to Fig. 12, when the engine 28 is not operating, the hub 204 is rotationally offset counter-clockwise (with reference to the orientation shown in Fig. 12) relative to the housing 202 such that, at rest, the external arms 244 are not centered between the internal arms 230 and the chambers 246B have a smaller volume than the chambers 246A. In the present embodiment, the offset is 1.5 degrees, but other angles are contemplated. It is also contemplated that there could be no offset such that the external arms 244 are centered between the internal arms 230.

In the present embodiment, one of the internal arms 230 is shorter than the other internal arms 230, and one portion of the outer sleeve 216 between two of the external arms 244 has a greater radius than the other portions of the outer sleeves 216. As a result the hub 204 can only be inserted in the main housing portion 224 of the housing by aligning the portion of the outer sleeve 216 having a greater radius with the shorter internal arm 230. It is contemplated that this feature could be omitted or replaced by other similar features.

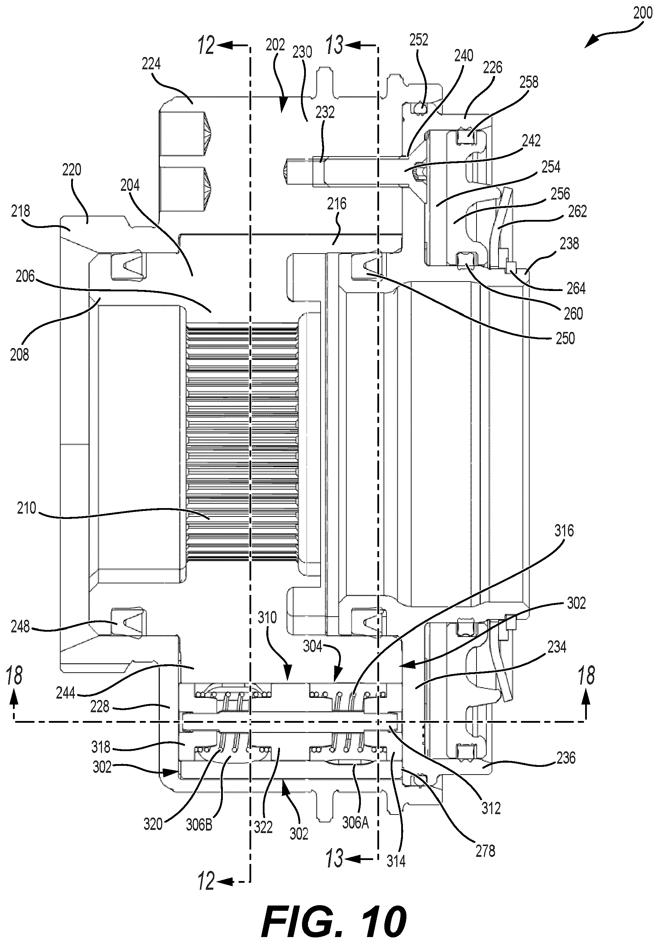

With reference to Fig. 10, the middle sleeve 208 of the hub 204 extends inside the rear sleeve 218 of the main housing portion 224. A seal 248 is provided between the sleeves 208, 218. The rear portion of the inner sleeve 238 of the front cover 226 extends inside the outer sleeve 216 of the hub 204. A seal 250 is provided between the sleeves 216, 238. Another seal 252 is provided between the outer diameter of the front cover 226 and a front portion of the main housing portion 224. The seals 248, 250, 252 prevent hydraulic fluid from leaking out of the volume defined between the housing 202 and the hub 204.

During use, the temperature of the hydraulic fluid in the hydraulic damper 200 changes. To allow for the thermal expansion and contraction of the hydraulic fluid, the hydraulic damper 200 has a variable volume chamber 254. The variable volume chamber 254 is defined radially between the outer and inner sleeves 236, 238 of the front cover 226 and axially between the annular body 234 of the front cover 226 and an annular piston 256. The annular piston 256 is disposed radially between the outer and inner sleeves 236, 238 of the front cover 226. A seal 258 is provided between the outer diameter of the annular piston 258 and the outer sleeve 236. Another seal 260 is provided between the inner diameter of the annular piston 256 and the inner sleeve 238. The seals 258, 260 prevent hydraulic fluid from leaking out of the variable volume chamber 254. A spring disc 262 is provided around the inner sleeve 238. The spring disc 262 biases the annular piston 256 toward the annular body 234 of the front cover 226. A circlip 264 prevents the annular piston 256 and the spring disc 262 from sliding off of the inner sleeve 238. The variable volume chamber 254 fluidly communicates with the volume defined between the housing 202 and the hub 204 via apertures 266 (Fig. 15) defined in the annular body 234 of the front cover 226. In response to an increase in temperature of the hydraulic fluid, the annular piston 256 moves away from the annular body 234, thereby increasing the volume of the variable chamber 254 to permit the thermal expansion of the hydraulic fluid. In response to a decrease in temperature of the hydraulic fluid, the spring disc 262 moves the annular piston 256 toward the annular body 234, thereby decreasing the volume of the variable chamber 254 to compensate for the thermal contraction of the hydraulic fluid.

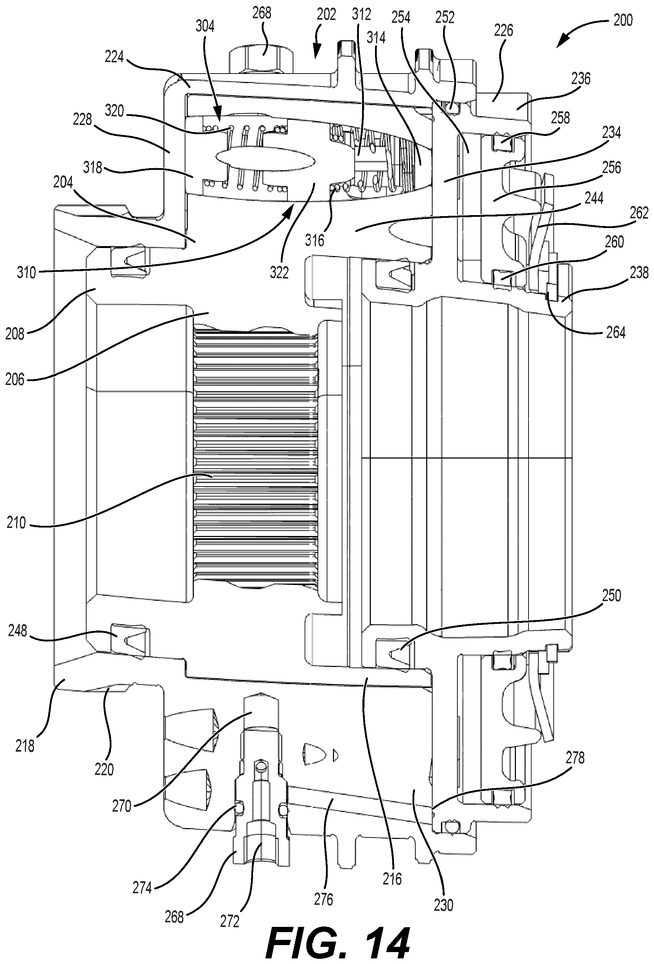

To fill the volume defined between the housing 202 and the hub 204 and the variable volume expansion chamber 254 with hydraulic fluid, the hydraulic damper 200 is provided with two plugs 268. As best seen in Fig. 12, the two plugs 268 are threaded into two radially extending threaded bores 270 defined in two of the internal arms 230. Each plug 268 defines a generally T-shaped passage 272. A seal 274 is provided between each plug 268 and the wall of its corresponding bore 270. As can be seen in Fig. 14 for one of the threaded bores 270, for each threaded bore 270, a passage 276 extends diagonally in the corresponding internal arm 230 from the threaded bore 270 to a front face of the internal arm 230. The passages 276 open into a groove 278 (best seen in Fig. 15) defined in a rear face of the front cover 226. The groove 278 fluidly communicates with the volume defined between the housing 202 and the hub 204. When the plugs 268 are fully screwed in, the passages 276 do not communicate with the T-shaped passages 272 of the plugs 268, and fluid cannot enter or exit the passages 276 via the T-shaped passages 272. When the plugs 268 are partially unscrewed, the passages 276 communicate with the T-shaped passages 272 of the plugs 268, and fluid can enter or exit the passages 276 via the T-shaped passages 272. It is contemplated that in embodiments having an even number of internal arms 230 and external arms 244, the plugs 268 would be disposed radially opposite to each other.

Before installing the hydraulic damper 200 into the propeller drive system 100, the volume defined between the housing 202 and the hub 204 and the variable volume expansion chamber 254 are filled with hydraulic fluid as follows: the hydraulic damper 200 is oriented such that one of the plugs 268 is disposed at the top and extends vertically; both plugs 268 are partially unscrewed; hydraulic fluid is pumped in the T-shaped passage 272 of the lower plug 268; from this T-shaped passage 272, hydraulic fluid flows into the corresponding passage 276, then into the groove 278, then into the volume defined between the housing 202 and the hub 204, and from this volume into the variable volume chamber 254 via the apertures 266 in the front cover 226; air present in the volume defined between the housing 202 and the hub 204, and in the variable volume chamber 254 is vented through the passage 276 and the T-shaped passage 272 in the plug 268 at the top of the hydraulic; and finally when hydraulic fluid flows out of the T-shaped passage 272 of the top plug 268, the volume defined between the housing 202 and the hub 204, and the variable volume chamber 254 a completely filled with hydraulic fluid, and hydraulic fluid stops to be pumped and both plugs are fully screwed in. Once the hydraulic damper 200 is installed into the propeller drive system 100, the volume defined between the housing 202 and the hub 204 and the variable volume expansion chamber 254 can be topped up with hydraulic fluid as follows: a plug 280 (Figs. 4 to 6) is removed from the top of the housing 108 of the propeller drive system 100; the output shaft 102 is turned, by manually turning the propeller 34, until one of the plugs 268 is aligned with the aperture 282 (Fig. 6) that was closed by the plug 280; this plug 268 is partially unscrewed; hydraulic fluid is added to the hydraulic damper 200 via the T-shaped passage 272 of this plug 268; this plug 268 is fully screwed in; and finally the plug 280 is placed back in the aperture 282.

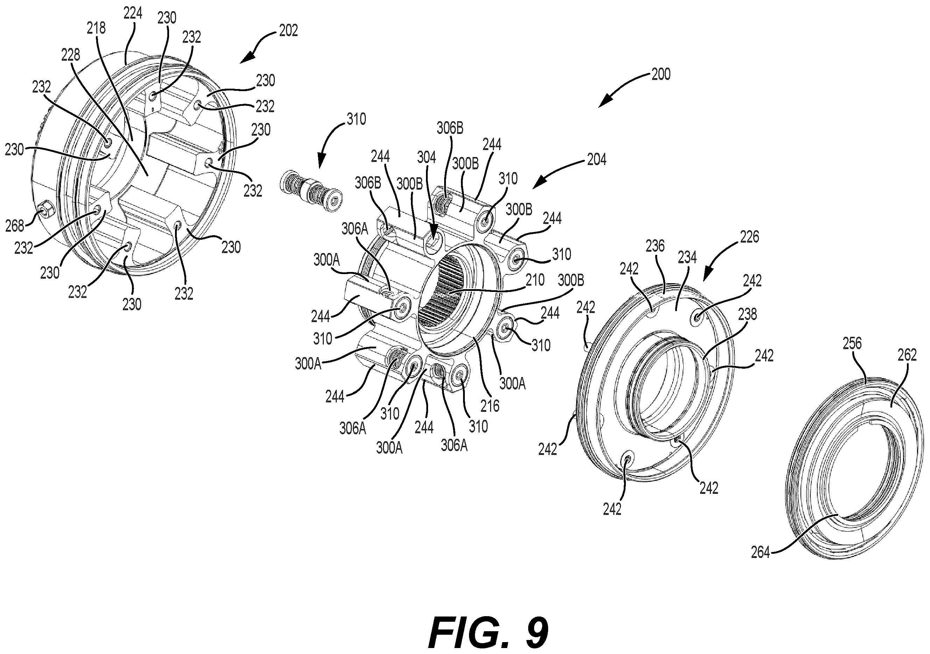

Turning now to Figs. 9 to 13 and 16, the external arms 244 and piston assemblies 310 will be described in more detail. As in the present embodiment all of the external arms 244 are the same and all of the piston assemblies 310 are the same, only one of the external arms 244 and one of the piston assemblies will be described in detail and this description applies to all external arms 244 and piston assemblies 310. Each external arm 244 has a piston assembly 310 disposed therein, as will be described in more detail below.

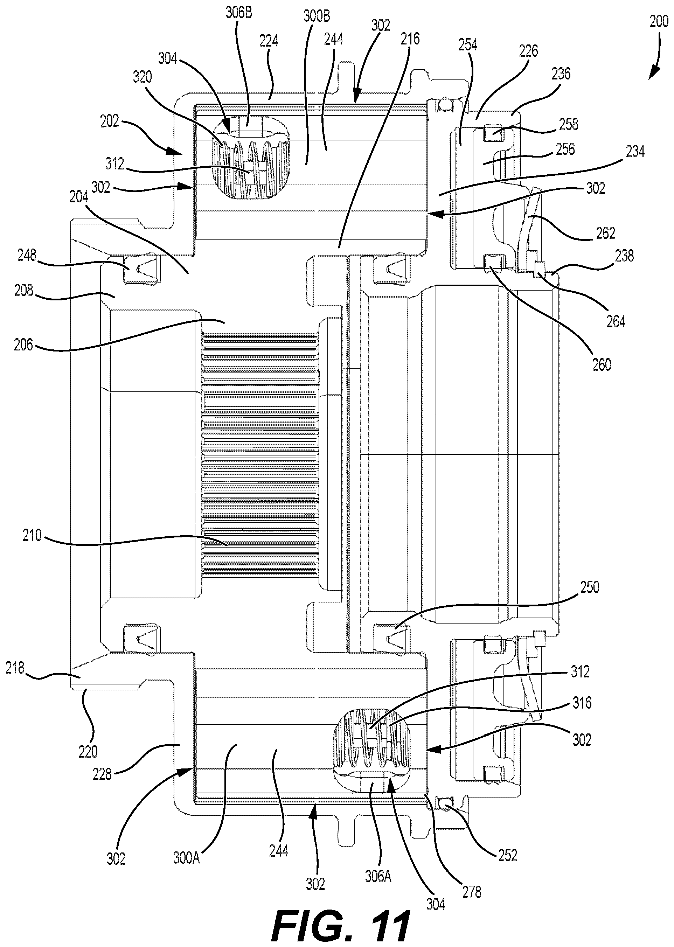

With reference to Figs. 9 to 13, the external arm 244 has a side 300A adjacent to and facing the main chamber 246A and a side 300B adjacent to and facing the main chamber 246B. As can be seen, the sides 300A, 300B are convex, but other shapes are contemplated. Small gaps 302 (Figs. 10 and 11) are defined between the free end of the external arm 244 and the main housing portion 224, between the rear of the external arm 244 and the rear side 228 of the main housing portion 224, and between the front of the external arm 244 and the annular body 234 of the front cover 226. The location of the gaps 302 have been labelled in Figs. 10 and 11, but it should be noted that the gaps 302 are too small to clearly see in the figures. It is contemplated that for each of the external arms 244 there could be only one or two of the gaps 302. When the housing 202 and the hub 204 rotate relative to each other about the rotation axis 225, hydraulic fluid flows between the main chambers 246A, 246B via the gaps 302. The external arm 244 defines an intermediate chamber 304 that extends from its front to its rear. The external arm 244 also defines a front aperture 306A in its side 300A at a front thereof. The front aperture 306A fluidly connects the main chamber 246A with the intermediate chamber 304. The external arm 244 also defines a rear aperture 306B in its side 300B at a rear thereof. The rear aperture 306B fluidly connects the main chamber 246B with the intermediate chamber 304.

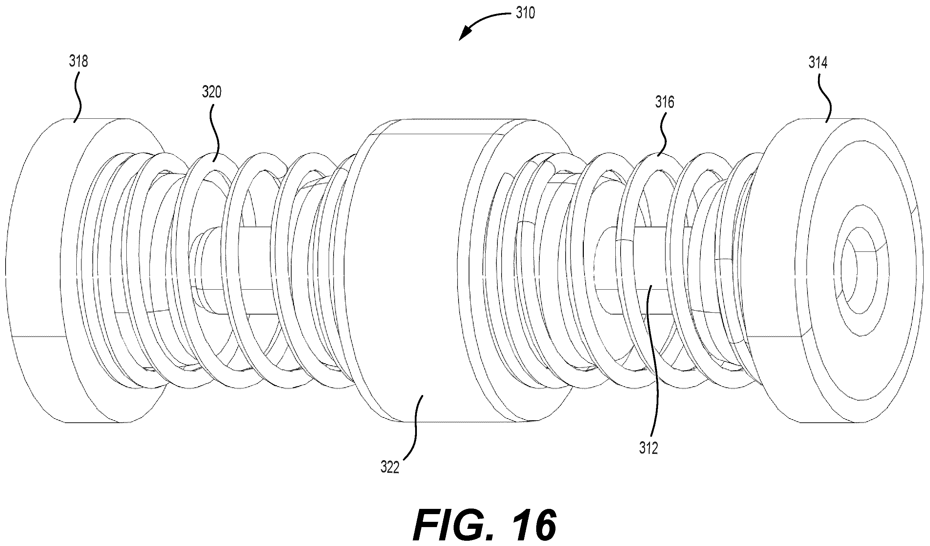

The piston assembly 310 is disposed in the intermediate chamber 304. With reference to Fig. 16, the piston assembly 310 has a central shaft 312, a front stopper 314, a front spring 316, a rear stopper 318, a rear spring 320 and a piston 322. The front and rear stoppers 314, 318 are fixed to the front and rear ends of the shaft 312 respectively. The piston 322 is slidably disposed on the shaft 312 between the two stoppers 314, 318. The front spring 316 is disposed around the shaft 312 between the front stopper 314 and the piston 322. The front spring 316 biases the piston 322 toward the rear stopper 318. The rear spring 320 is disposed around the shaft 312 between the rear stopper 318 and the piston 322. The rear spring 320 biases the piston 322 toward the front stopper 314. With reference to Fig. 10, front and rear stoppers 314, 318 are disposed into apertures defined by the intermediate chamber 304 in the front and rear of the external arm 244 respectively. The springs 316, 320 bias the piston 322 toward a middle of the intermediate chamber 304 as shown in Fig. 10.

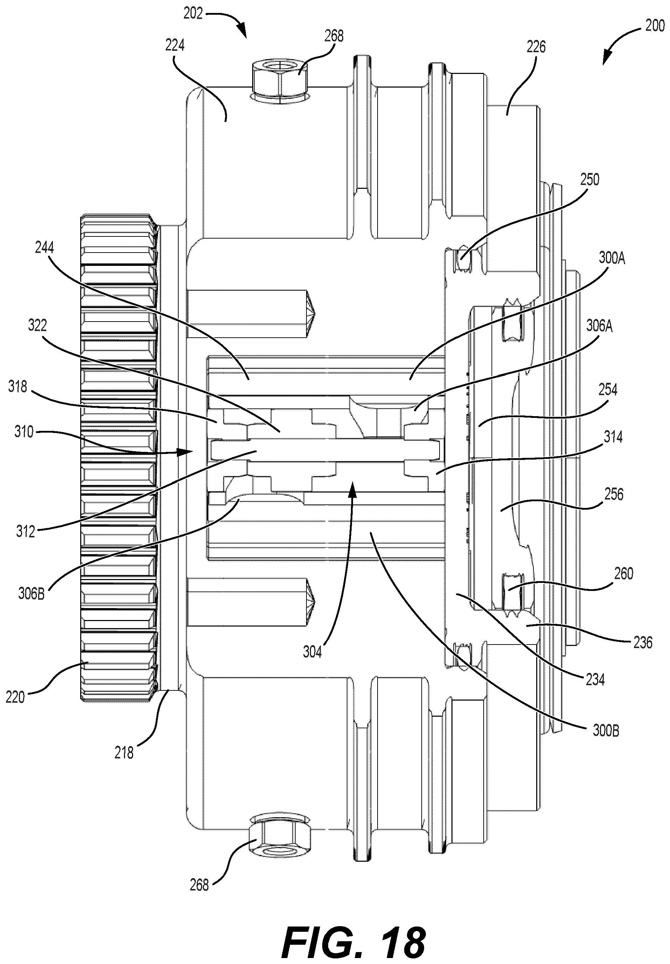

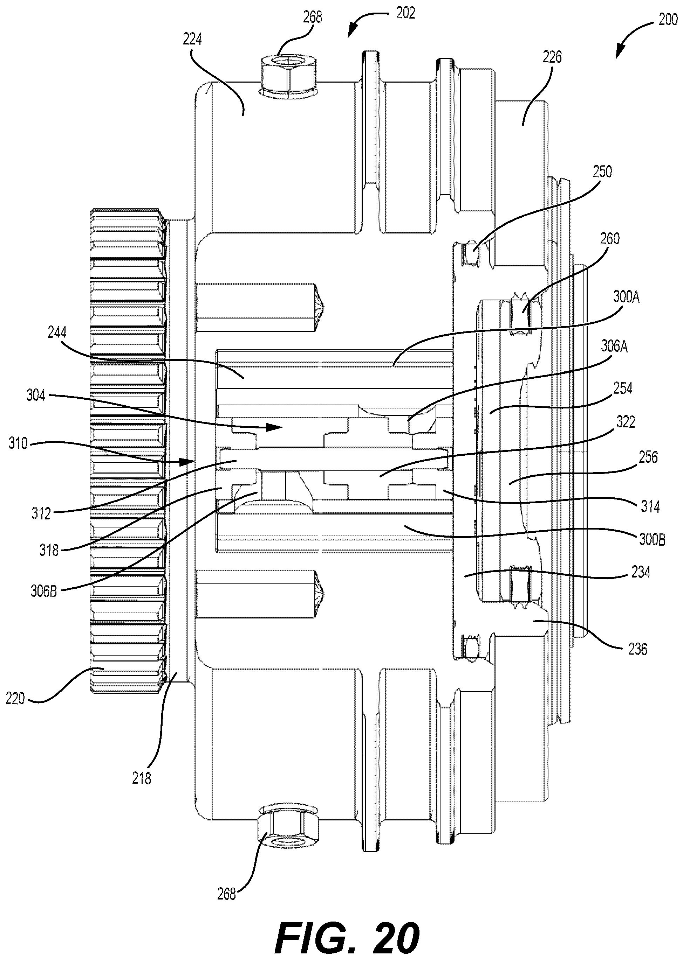

With reference to Fig. 10, when the piston 322 is in the center of the intermediate chamber 304, the piston 322 is between the front and rear apertures 306A, 306B. The piston 322 is sized such that hydraulic fluid in the intermediate chamber 304 cannot flow from one side of the piston 322 to the other. It is contemplated that in some embodiments, the piston 322 could have a slightly smaller diameter such that some hydraulic fluid in the intermediate chamber 304 could flow from one side of the piston 322 to the other. The piston 322 is movable along the shaft 312 between a front stop position shown in Fig. 20 and a rear stop position shown in Fig. 18. In the front stop position (Fig. 20), the piston 322 abuts the front stopper 314. In the rear stop position (Fig. 18), the piston 322 abuts the rear stopper 314. At all positions of the piston 322, the piston 322 prevents the flow of hydraulic fluid from one of the apertures 306A, 306B to the other one of the apertures 306A, 306B via the intermediate chamber 304.

The operation of the hydraulic damper 200 will now be described with reference to Figs. 12 and 17 to 20. As explained above, during operation, the torsion angle of the torsion bar 168 varies. When the engine 28 operates at steady state, such as when the engine 28 operates at full power, the variation in torsion angle due to torque variations is within a range X of torsion angles. The hub 204 rotates relative to the housing 202 by a number of degrees corresponding to the variation on torsion angles. As such, the hydraulic damper 200 is designed to provide no or very little damping for changes in torsion angles within the range X of torsion angles, such that during a steady state operation, the torsion bar 168 absorbs the vibrational energy, and to provide a greater degree of damping for changes in torsion angles outside of the range X of torsion angles. In the present embodiment, the range X of torsion angles corresponds a variation in torsion angle of 1.5 degrees in each direction from a mean torsion angle, which results in a rotation of the hub 204 relative to the housing 202 of 1.5 degrees in each direction from the position illustrated in Fig. 12. It is contemplated that the range X of torsion angles could be more or less than 1.5 degrees in each direction. The exemplary value of 1.5 degrees in each direction will be used in the explanations provided below.

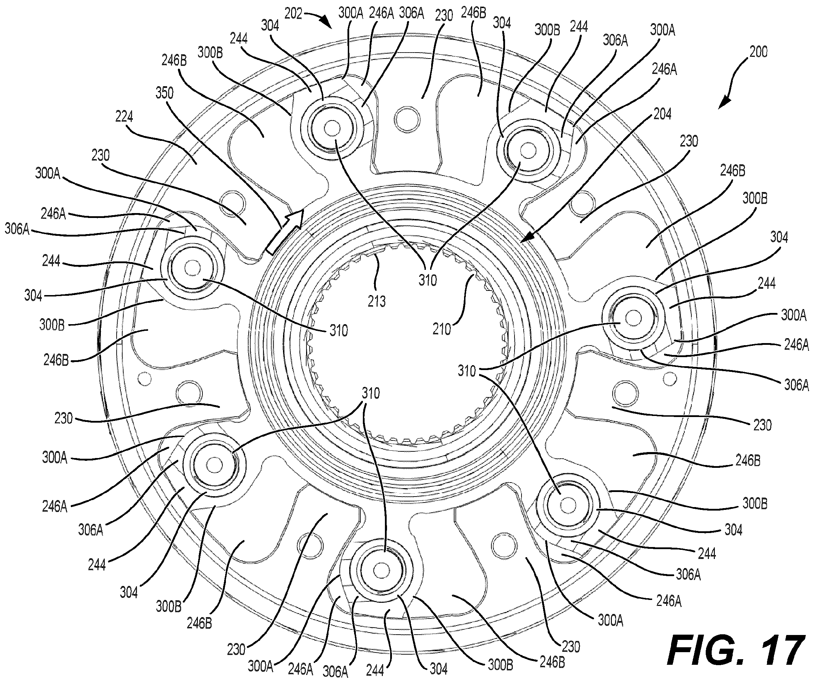

In response to a rotation of the hub 204 relative to the housing 202 in the direction indicated by arrow 350 in Fig. 17, the volumes of the main chambers 246A get smaller and the volumes of the main chambers 246B get bigger. As a result, for each external arm 244 and its corresponding piston assembly 310 and main chambers 246A, 246B, hydraulic fluid flows from the main chamber 246A into the intermediate chamber 304 via the aperture 306A, thereby moving the piston 322 rearward toward the rear stopper 318, which in turn causes hydraulic fluid to flow from the intermediate chamber 304 to the to main chamber 246B via the aperture 306B. At the same time hydraulic fluid flows from the main chamber 246A to the main chamber 246B via the gaps 302. With the piston 322 starting at the middle of the intermediate chamber 304, the piston 322 reaches and abuts the rear stopper 318 (i.e. the rear stop position, Fig. 18) in response to a rotation of 1.5 degrees of the hub 204 relative to the housing 202 in the direction indicated by arrow 350. It should be understood that a rotation of the housing 202 relative to the hub 204 in a direction opposite to the direction indicated by arrow 350 would have an equivalent effect.

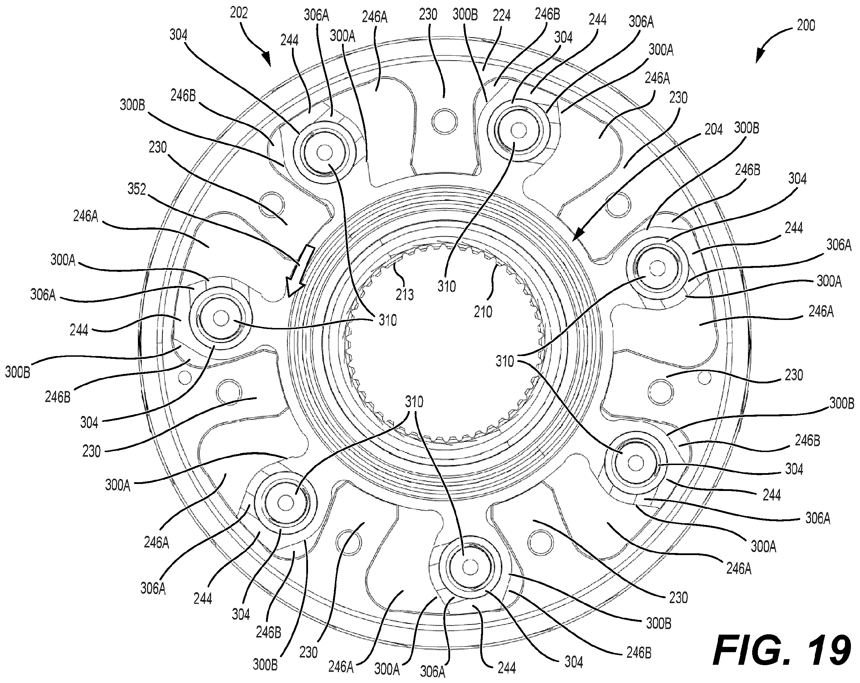

In response to a rotation of the hub 204 relative to the housing 202 in the direction indicated by arrow 352 in Fig. 19, the volumes of the main chambers 246B get smaller and the volumes of the main chambers 246A get bigger. As a result, for each external arm 244 and its corresponding piston assembly 310 and main chambers 246A, 246B, hydraulic fluid flows from the main chamber 246B into the intermediate chamber 304 via the aperture 306B, thereby moving the piston 322 forward toward the front stopper 314, which in turn causes hydraulic fluid to flow from the intermediate chamber 304 to the to main chamber 246A via the aperture 306A. At the same time hydraulic fluid flows from the main chamber 246B to the main chamber 246A via the gaps 302. With the piston 322 starting at the middle of the intermediate chamber 304, the piston 322 reaches and abuts the front stopper 314 (i.e. the front stop position) in response to a rotation of the hub 204 of 1.5 degrees relative to the housing 202 in the direction indicated by arrow 352. It should be understood that a rotation of the housing 202 relative to the hub 204 in a direction opposite to the direction indicated by arrow 352 would have an equivalent effect.

While the piston 322 is between and spaced from the stoppers 314, 318, the change in volume of the main chambers 246A, 246B resulting from a rotation of the hub 204 relative to the housing 202 is compensated by the displacement of the piston 322 inside the intermediate chamber 304 and the flow of hydraulic fluid through the gaps 302. As a result, the hydraulic damper 200 offers no resistance to changes in torsion angle within this range and the hydraulic damper 200 provides no or very little damping. It is contemplated that the hydraulic damper 200 could be designed to provide small degree of damping within this range. As would be understood from the above explanations, in the present exemplary embodiment, the piston 322 moves from one stopper 314, 318 to the other stopper 314, 318 in response to a rotation of the hub 204 relative to the housing 202 of 3 degrees, which corresponds to a change of torsion angle of 3 degrees.

Once the pistons 322 make contact with their corresponding stoppers 318, in response to continued rotation of the hub 204 relative to the housing 202 in the direction 350, the flow of hydraulic fluid in and out of the intermediate chambers 304 is stopped by the pistons 322, and hydraulic fluid flows from the main chambers 246A to the main chambers 246B only via the gaps 302. As a result, the hydraulic damper 200 offers more resistance to the relative rotation between the hub 204 and the housing 202, and the degree of damping of the hydraulic damper 200 is increased compared to when the pistons 322 do not contact the stoppers 318.

Similarly, once the pistons 322 make contact with their corresponding stoppers 314, in response to continued rotation of the hub 204 relative to the housing 202 in the direction 352, the flow of hydraulic fluid in and out of the intermediate chambers 304 is stopped by the pistons 322, and hydraulic fluid flows from the main chambers 246B to the main chambers 246A only via the gaps 302. As a result, the hydraulic damper 200 offers more resistance to the relative rotation between the hub 204 and the housing 202, and the degree of damping of the hydraulic damper 200 is increased compared to when the pistons 322 do not contact the stoppers 314.

As such, the hydraulic damper 200 provides one degree of damping in response the changes of torsion angles within a range where the pistons 322 do not contact the stoppers 314, 318 and the hydraulic damper 200 provides another, greater, degree of damping outside of this range where the pistons 322 make contact with the stoppers 314 or with the stoppers 318.

During engine start-up, a resonance situation can occur as previously explained. During such a situation, the variations in torsion angles could be large enough to cause the pistons 322 to contact the stoppers 314, 318, in which case the hydraulic damper 200 will dampen these variations. Similar large variations in torsion angles could occur during load changes of the engine 28 or when stopping the engine 28.

From the position shown in Fig. 12, in the present embodiment, the hub 204 can rotate relative to the housing 202 in the direction indicated by the arrow 350 by 8 degrees before the external arms 244 make contact with the internal arms 230 as shown in Fig. 17. Other angles are contemplated. This is referred to as the maximum thrust position. As would be understood, should the hub 204 rotate relative to the housing 202 from the position shown in Fig. 12 to the position shown in Fig. 17, the pistons 322 will move to make contact with the rear stoppers 318 as shown in Fig. 18. From the position shown in Fig. 12, in the present embodiment, the hub 204 can rotate relative to the housing 202 in the direction indicated by the arrow 352 by 5 degrees before the external arms 244 make contact with the internal arms 230 as shown in Fig. 19. Other angles are contemplated. This is referred to as the maximum drag position. As would be understood, should the hub 204 rotate relative to the housing 202 from the position shown in Fig. 12 to the position shown in Fig. 19, the pistons 322 will move to make contact with the front stoppers 314 as shown in Fig. 20.

Once the torsion bar 168 rotates enough that the external arms 244 make contact with the internal arms 230 as shown in Figs. 17 and 19, should the torque continue to increase, the clutch 144 will slip once the slip torque of the clutch 144 is reached to help prevent damage to the engine 28.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. An aircraft propeller drive system (100) for an aircraft (10), the aircraft (10) having a propeller (26) driven by an intermittent combustion internal combustion engine (28) via the propeller drive system (100), the propeller drive system (100) comprising:
a torsion bar (168) having a first end and a second end opposite the first end, the first end adapted to be mechanically operatively connected to and driven by the engine (28) about a torsion axis (227), the second end being rotatable relative to the first end about the torsion axis (227) by a torsion angle;
an output shaft (102) rotationally fixedly connected to and driven by the second end of the torsion bar (168), the output shaft (102) being adapted for being connected to the propeller (26); and
a hydraulic damper (200) mechanically operatively connected between the output shaft (102) and the first end of the torsion bar (168) to dampen at least some variations in torsion angle of the torsion bar (168), **characterised in that** the hydraulic damper (200) provides a first degree of damping for torsion angles within a range of torsion angles of the torsion bar (168) and a second degree of damping for torsion angles outside of the range of torsion angles, the second degree of damping being greater than the first degree of damping.

2. The aircraft propeller drive system (100) of claim 1, wherein:
the hydraulic damper (200) comprises:
a housing (202);
a hub (204) disposed in the housing (202), the hub (204) being rotatable relative to the housing (202); and
hydraulic fluid in a volume defined between the housing (202) and the hub (204);
one of the housing (202) and the hub (204) is rotationally fixedly connected to the first end of the torsion bar (168); and
an other of the housing (202) and the hub (204) is rotationally fixedly connected to the output shaft (102).

3. The aircraft propeller drive system (100) of claim 2, wherein:
the housing (202) is rotationally fixedly connected to the first end of the torsion bar (168); and
the hub (204) is rotationally fixedly connected to the output shaft (102).

4. The aircraft propeller drive system (100) of claim 3, further comprising a clutch (144), wherein:
the clutch (144) comprises:
a driving member adapted to be mechanically operatively connected to and driven by the engine (28); and
a driven member (146) rotationally fixed to the first end of the torsion bar (168);
the first end of the torsion bar (168) is mechanically operatively connected to and driven by the engine (28) via the clutch (144).

5. The aircraft propeller drive system (100) of claim 4, wherein the housing (202) is rotationally fixedly connected to the driven member (146) of the clutch (144); and is rotationally fixedly connected to the first end of the torsion bar (168) via the driven member (146).

6. The aircraft propeller drive system (100) of claim 5, further comprising a hollow shaft (160) connecting the driven member (146) of the clutch (144) to the first end of the torsion bar (168); and
wherein the torsion bar (168) is disposed at least partially inside the hollow shaft (160).

7. The aircraft propeller drive system (100) of any one of claims 4 to 6, wherein the torsion bar (168), the output shaft (102), the hydraulic damper (200) and the clutch (144) are coaxial.

8. The aircraft propeller drive system (100) of any one of claims 2 to 7, wherein:
the housing (202) of the hydraulic damper (200) has a plurality of internal arms (230) extending radially inward;
the hub (204) has a plurality of external arms (244) extending radially outward;
the external arms (244) are disposed between the internal arms (230); and
a plurality of main chambers (246A, 246B) are defined between the external arms (244) and the internal arms (230).

9. The aircraft propeller drive system (100) of claim 8, wherein:
each external arm of the plurality of external arms (244) defines:
an intermediate chamber (304);
a first aperture (306A) in a first side (300A) of the external arm at a front of the first side (300A), the first aperture (306A) fluidly connecting a first main chamber (246A) of the plurality of main chambers (246A, 246B) with the intermediate chamber (304), the first main chamber (246A) being adjacent to the first side (300A) of the external arm; and
a second aperture (306B) in a second side (300B) of the of the external arm at a rear of the second side (300B), the second aperture (306B) fluidly connecting a second main chamber (246B) of the plurality of main chambers (246A, 246B) with the intermediate chamber (304), the second main chamber (246B) being adjacent to the second side (300B) of the external arm;
for each external arm:
a piston (322) is disposed in the intermediate chamber (304) axially between the first and second aperture (306B),
in response to rotation of the hub (204) in a first direction (350) relative to the housing (202):
hydraulic fluid flowing from the first main chamber (246A) into the intermediate chamber (304) via the first aperture (306A);
the piston (322) moving rearward; and
hydraulic fluid flowing from the intermediate chamber (304) into the second main chamber (246B) via the second aperture (306B); and
in response to rotation of the hub (204) in a second direction (352) relative to the housing (202):
hydraulic fluid flowing from the second main chamber (246B) into the intermediate chamber (304) via the second aperture (306B);
the piston (322) moving forward; and
hydraulic fluid flowing from the intermediate chamber (304) into the first main chamber (246A) via the first aperture (306A).

10. The aircraft propeller drive system (100) of claim 9, wherein, for each external arm:
in response to rotation of the hub (204) in the first direction (350) relative to the housing (202) and in response to the piston (322) reaching a rear stop position:
flow of hydraulic fluid into and out of the intermediate chamber (304) stopping or reducing; and
hydraulic fluid flowing from the first main chamber (246A) to the second main chamber (246B) via at least one gap (302) between the external arm and the housing (202), thereby increasing a degree of damping of the hydraulic damper (200); and
in response to rotation of the hub (204) in the second direction (352) relative to the housing (202) and in response to the piston (322) reaching a front stop position:
flow of hydraulic fluid into and out of the intermediate chamber (304) stopping or reducing; and
hydraulic fluid flowing from the second main chamber (246B) to the first main chamber (246A) via the at least one gap (302) between the external arm and the housing (202), thereby increasing the degree of damping of the hydraulic damper (200).

11. The aircraft propeller drive system (100) of claim 9 or 10, further comprising, for each external arms (244):
two springs (316, 320) disposed in the intermediate chamber (304), the piston (322) being disposed between the two springs (316, 320), and the two springs (316, 320) biasing the piston (322) toward a middle of the intermediate chamber (304).

12. The aircraft propeller drive system (100) of claim 8 or 9, wherein in response to relative rotation between the housing (202) and the hub (204), hydraulic fluid flows between the main chambers (246A, 246B) by flowing through gaps (302) between the external arms (244) and the housing (202).

13. The aircraft propeller drive system (100) of any one of claims 2 to 12, wherein the hydraulic damper (200) further comprises a variable volume chamber (254) fluidly connected to the volume defined between the housing (202) and the hub (204).

14. The aircraft propeller drive system (100) of any one of claim 1 to 13, wherein:
the output shaft (102) is at least partially hollow;
the torsion bar (168) is disposed at least partially inside the output shaft (102); and
the output shaft (102) and the torsion bar (168) are coaxial.

15. A method for transmitting power from an intermittent combustion internal combustion engine (28) to a propeller (26) of an aircraft (10), the propeller (26) being connected to an output shaft (102), the method comprising:
driving the output shaft (102) with the engine (28) via a torsion bar (168), the torsion bar (168) having a first end mechanically operatively connected to the engine (28) and a second end connected to the output shaft (102), the second end being rotatable relative to the first end about a torsion axis (227) by a torsion angle; and
damping variations of torsion angles of the torsion bar (168) at least for changes of torsion angles outside of a range of torsion angles with a hydraulic damper (200) mechanically operatively connected between the output shaft (102) and the first end of the torsion bar (168), damping variations of torsion angles of the torsion bar (168) at least for changes in torsion angles outside of a range of torsion angles with a hydraulic damper (200)
**characterised in that** the method further comprises the step of:
providing a first degree of damping for changes in torsion angles within the range of torsion angles and a second degree of damping for changes torsion angles outside of the range of torsion angles, the second degree of damping being greater than the first degree of damping.

## Patentansprüche

1. Flugzeugpropellerantriebssystem (100) für ein Flugzeug (10), wobei das Flugzeug (10) einen Propeller (26) aufweist, der von einem intermittierend arbeitenden Verbrennungsmotor (28) über das Propellerantriebssystem (100) angetrieben wird, wobei das Propellerantriebssystem (100) Folgendes umfasst:
einen Torsionsstab (168) mit einem ersten Ende und einem zweiten Ende, das dem ersten Ende gegenüberliegt, wobei das erste Ende so ausgelegt ist, dass es mechanisch wirksam mit dem Motor (28) verbunden ist und von diesem um eine Torsionsachse (227) angetrieben wird, wobei das zweite Ende relativ zum ersten Ende um die Torsionsachse (227) um einen Torsionswinkel drehbar ist;
eine Abtriebswelle (102), die drehfest mit dem zweiten Ende des Torsionsstabes (168) verbunden ist und von diesem angetrieben wird, wobei die Abtriebswelle (102) zur Verbindung mit dem Propeller (26) ausgelegt ist; und
einen hydraulischen Dämpfer (200), der mechanisch wirksam zwischen der Abtriebswelle (102) und dem ersten Ende des Torsionsstabes (168) verbunden ist, um zumindest einige Schwankungen des Torsionswinkels des Torsionsstabes (168) zu dämpfen, **dadurch gekennzeichnet, dass** der hydraulische Dämpfer (200) eine Dämpfung ersten Grades für Torsionswinkel innerhalb eines Bereiches von Torsionswinkeln des Torsionsstabes (168) und eine Dämpfung zweiten Grades für Torsionswinkel außerhalb des Bereiches von Torsionswinkeln bereitstellt, wobei die Dämpfung zweiten Grades stärker ist als die Dämpfung ersten Grades.

2. Flugzeugpropellerantriebssystem (100) nach Anspruch 1, wobei:
der hydraulische Dämpfer (200) Folgendes umfasst:
ein Gehäuse (202);
eine im Gehäuse (202) angeordnete Nabe (204), wobei die Nabe (204) relativ zum Gehäuse (202) drehbar ist; und
eine Hydraulikflüssigkeit in einem Volumen, das zwischen dem Gehäuse (202) und der Nabe (204) definiert ist;
wobei eines von dem Gehäuse (202) und der Nabe (204) drehfest mit dem ersten Ende des Torsionsstabes (168) verbunden ist; und
ein anderes von dem Gehäuse (202) und der Nabe (204) drehfest mit der Abtriebswelle (102) verbunden ist.

3. Flugzeugpropellerantriebssystem (100) nach Anspruch 2, wobei:
das Gehäuse (202) drehfest mit dem ersten Ende des Torsionsstabes (168) verbunden ist; und
die Nabe (204) drehfest mit der Abtriebswelle (102) verbunden ist.

4. Flugzeugpropellerantriebssystem (100) nach Anspruch 3, ferner umfassend eine Kupplung (144), wobei:
die Kupplung (144) Folgendes umfasst:
ein Antriebselement, das so ausgelegt ist, dass es mechanisch wirksam mit dem Motor (28) verbunden ist und von diesem angetrieben wird; und
ein angetriebenes Element (146), das drehfest mit dem ersten Ende des Torsionsstabes (168) verbunden ist;
wobei das erste Ende des Torsionsstabes (168) über die Kupplung (144) mechanisch wirksam mit dem Motor (28) verbunden ist und von diesem angetrieben wird.

5. Flugzeugpropellerantriebssystem (100) nach Anspruch 4, wobei das Gehäuse (202) drehfest mit dem angetriebenen Element (146) der Kupplung (144) verbunden ist; und über das angetriebene Element (146) drehfest mit dem ersten Ende des Torsionsstabes (168) verbunden ist.

6. Flugzeugpropellerantriebssystem (100) nach Anspruch 5, ferner umfassend eine Hohlwelle (160), die das angetriebene Element (146) der Kupplung (144) mit dem ersten Ende des Torsionsstabes (168) verbindet; und
wobei der Torsionsstab (168) zumindest teilweise im Inneren der Hohlwelle (160) angeordnet ist.

7. Flugzeugpropellerantriebssystem (100) nach einem der Ansprüche 4 bis 6, wobei der Torsionsstab (168), die Abtriebswelle (102), der hydraulische Dämpfer (200) und die Kupplung (144) koaxial angeordnet sind.

8. Flugzeugpropellerantriebssystem (100) nach einem der Ansprüche 2 bis 7, wobei:
das Gehäuse (202) des hydraulischen Dämpfers (200) eine Vielzahl von inneren Armen (230) aufweist, die sich radial nach innen erstrecken;
die Nabe (204) eine Vielzahl von äußeren Armen (244) aufweist, die sich radial nach außen erstrecken;
die äußeren Arme (244) zwischen den inneren Armen (230) angeordnet sind; und
zwischen den äußeren Armen (244) und den inneren Armen (230) eine Vielzahl von Hauptkammern (246A, 246B) definiert sind.

9. Flugzeugpropellerantriebssystem (100) nach Anspruch 8, wobei:
jeder äußere Arm der Vielzahl von äußeren Armen (244) Folgendes definiert:
eine Zwischenkammer (304);
eine erste Öffnung (306A) in einer ersten Seite (300A) des äußeren Arms an der Vorderseite der ersten Seite (300A), wobei die erste Öffnung (306A) eine erste Hauptkammer (246A) der Vielzahl von Hauptkammern (246A, 246B) fluidisch mit der Zwischenkammer (304) verbindet, wobei die erste Hauptkammer (246A) an die erste Seite (300A) des äußeren Arms angrenzt; und
eine zweite Öffnung (306B) in einer zweiten Seite (300B) des äußeren Arms an der Rückseite der zweiten Seite (300B), wobei die zweite Öffnung (306B) eine zweite Hauptkammer (246B) der Vielzahl von Hauptkammern (246A, 246B) fluidisch mit der Zwischenkammer (304) verbindet, wobei die zweite Hauptkammer (246B) an die zweite Seite (300B) des äußeren Arms angrenzt;
wobei bei jedem äußeren Arm:
ein Kolben (322) axial zwischen der ersten und der zweiten Öffnung (306B) in der Zwischenkammer (304) angeordnet ist,
wobei als Reaktion auf eine Drehung der Nabe (204) in einer ersten Richtung (350) relativ zum Gehäuse (202):
Hydraulikflüssigkeit von der ersten Hauptkammer (246A) über die erste Öffnung (306A) in die Zwischenkammer (304) fließt;
der Kolben (322) sich nach hinten bewegt; und
Hydraulikflüssigkeit von der Zwischenkammer (304) über die zweite Öffnung (306B) in die zweite Hauptkammer (246B) fließt; und
wobei als Reaktion auf eine Drehung der Nabe (204) in einer zweiten Richtung (352) relativ zum Gehäuse (202):
Hydraulikflüssigkeit von der zweiten Hauptkammer (246B) über die zweite Öffnung (306B) in die Zwischenkammer (304) fließt;
der Kolben (322) sich nach vorne bewegt; und
Hydraulikflüssigkeit von der Zwischenkammer (304) über die erste Öffnung (306A) in die erste Hauptkammer (246A) fließt.

10. Flugzeugpropellerantriebssystem (100) nach Anspruch 9, wobei Folgendes bei jedem äußeren Arm gilt:
als Reaktion auf eine Drehung der Nabe (204) in der ersten Richtung (350) relativ zum Gehäuse (202) und als Reaktion darauf, dass der Kolben (322) eine hintere Anschlagposition erreicht:
Zu- und Abfluss von Hydraulikflüssigkeit in die Zwischenkammer (304) bzw. aus dieser heraus wird gestoppt oder reduziert; und
Hydraulikflüssigkeit fließt von der ersten Hauptkammer (246A) zur zweiten Hauptkammer (246B) über mindestens einen Spalt (302) zwischen dem äußeren Arm und dem Gehäuse (202), wodurch sich der Dämpfungsgrad des hydraulischen Dämpfers (200) erhöht; und
als Reaktion auf eine Drehung der Nabe (204) in der zweiten Richtung (352) relativ zum Gehäuse (202) und als Reaktion darauf, dass der Kolben (322) eine vordere Anschlagposition erreicht:
Zu- und Abfluss von Hydraulikflüssigkeit in die Zwischenkammer (304) bzw. aus dieser heraus wird gestoppt oder reduziert; und
Hydraulikflüssigkeit fließt von der zweiten Hauptkammer (246B) zur ersten Hauptkammer (246A) über den mindestens einen Spalt (302) zwischen dem äußeren Arm und dem Gehäuse (202), wodurch sich der Dämpfungsgrad des hydraulischen Dämpfers (200) erhöht.

11. Flugzeugpropellerantriebssystem (100) nach Anspruch 9 oder 10, ferner umfassend für jeden äußeren Arm (244):
zwei Federn (316, 320), die in der Zwischenkammer (304) angeordnet sind, wobei der Kolben (322) zwischen den beiden Federn (316, 320) angeordnet ist und die beiden Federn (316, 320) den Kolben (322) in Richtung der Mitte der Zwischenkammer (304) vorspannen.

12. Flugzeugpropellerantriebssystem (100) nach Anspruch 8 oder 9, wobei als Reaktion auf eine relative Drehung zwischen dem Gehäuse (202) und der Nabe (204) Hydraulikflüssigkeit zwischen den Hauptkammern (246A, 246B) durch Spalten (302) zwischen den äußeren Armen (244) und dem Gehäuse (202) fließt.

13. Flugzeugpropellerantriebssystem (100) nach einem der Ansprüche 2 bis 12, wobei der hydraulische Dämpfer (200) ferner eine Kammer mit variablem Volumen (254) umfasst, die fluidisch mit dem Volumen verbunden ist, das zwischen dem Gehäuse (202) und der Nabe (204) definiert ist.

14. Flugzeugpropellerantriebssystem (100) nach einem der Ansprüche 1 bis 13, wobei:
die Abtriebswelle (102) zumindest teilweise hohl ist;
der Torsionsstab (168) zumindest teilweise im Inneren der Abtriebswelle (102) angeordnet ist; und
die Abtriebswelle (102) und der Torsionsstab (168) koaxial angeordnet sind.

15. Verfahren zur Kraftübertragung von einem intermittierend arbeitenden Verbrennungsmotor (28) auf einen Propeller (26) eines Flugzeugs (10), wobei der Propeller (26) mit einer Abtriebswelle (102) verbunden ist, wobei das Verfahren Folgendes umfasst:
Antreiben der Abtriebswelle (102) mit dem Motor (28) über einen Torsionsstab (168), wobei der Torsionsstab (168) ein erstes Ende aufweist, das mechanisch wirksam mit dem Motor (28) verbunden ist, und ein zweites Ende, das mit der Abtriebswelle (102) verbunden ist, wobei das zweite Ende relativ zum ersten Ende um eine Torsionsachse (227) um einen Torsionswinkel drehbar ist; und
Dämpfen von Schwankungen von Torsionswinkeln des Torsionsstabes (168) zumindest für Torsionswinkeländerungen außerhalb eines Bereiches von Torsionswinkeln mit einem hydraulischen Dämpfer (200), der mechanisch wirksam zwischen der Abtriebswelle (102) und dem ersten Ende des Torsionsstabes (168) verbunden ist, Dämpfen von Schwankungen von Torsionswinkeln des Torsionsstabes (168) zumindest für Torsionswinkeländerungen außerhalb eines Bereiches von Torsionswinkeln mit einem hydraulischen Dämpfer (200), **dadurch gekennzeichnet, dass** das Verfahren ferner den Schritt umfasst:
Bereitstellen einer Dämpfung ersten Grades für Torsionswinkeländerungen innerhalb des Bereiches von Torsionswinkeln und einer Dämpfung zweiten Grades für Torsionswinkeländerungen außerhalb des Bereiches von Torsionswinkeln, wobei die Dämpfung zweiten Grades stärker ist als die Dämpfung ersten Grades.

## Revendications

1. Système d'entraînement d'hélice d'aéronef (100) pour un aéronef (10), l'aéronef (10) comportant une hélice (26) entraînée par un moteur à combustion interne intermittente (28) par l'intermédiaire du système d'entraînement d'hélice d'aéronef (100), le système d'entraînement d'hélice d'aéronef (100) comprenant :
une barre de torsion (168) comportant une première extrémité et une seconde extrémité opposée à la première extrémité, la première extrémité étant conçue pour être reliée de manière mécaniquement fonctionnelle au moteur (28) et être entraînée par celui-ci autour d'un axe de torsion (227), la seconde extrémité étant rotative par rapport à la première extrémité autour de l'axe de torsion (227) selon un angle de torsion ;
un arbre de sortie (102) relié de manière fixe en rotation à la seconde extrémité de la barre de torsion (168) et entraîné par celle-ci, l'arbre de sortie (102) étant conçu pour être relié à l'hélice (26) ; et
un amortisseur hydraulique (200) relié de manière mécaniquement fonctionnelle entre l'arbre de sortie (102) et la première extrémité de la barre de torsion (168)pour amortir au moins certaines variations de l'angle de torsion de la barre de torsion (168), **caractérisé en ce que** l'amortisseur hydraulique (200) fournit un premier degré d'amortissement aux angles de torsion dans une plage d'angles de torsion de la barre de torsion (168) et un second degré d'amortissement aux angles de torsion en dehors de la plage d'angles de torsion, le second degré d'amortissement étant supérieur au premier degré d'amortissement.

2. Système d'entraînement d'hélice d'aéronef (100) selon la revendication 1, dans lequel :
l'amortisseur hydraulique (200) comprend :
un carter (202) ;
un moyeu (204) disposé dans le carter (202), le moyeu (204) étant rotatif par rapport au carter (202) ; et
un fluide hydraulique dans un volume défini entre le carter (202) et le moyeu (204) ;
un élément parmi le carter (202) et le moyeu (204) étant relié de manière fixe en rotation à la première extrémité de la barre de torsion (168) ; et
l'autre élément parmi le carter (202) et le moyeu (204) étant relié de manière fixe en rotation à l'arbre de sortie (102).

3. Système d'entraînement d'hélice d'aéronef (100) selon la revendication 2, dans lequel :
le carter (202) est relié de manière fixe en rotation à la première extrémité de la barre de torsion (168) ; et
le moyeu (204) est relié de manière fixe en rotation à l'arbre de sortie (102).

4. Système d'entraînement d'hélice d'aéronef (100) selon la revendication 3, comprenant en outre un embrayage (144), dans lequel :
l'embrayage (144) comprend :
un élément d'entraînement conçu pour être relié de manière mécaniquement fonctionnelle au moteur (28) et être entraîné par celui-ci ; et
un élément entraîné (146) fixé en rotation à la première extrémité de la barre de torsion (168) ;
la première extrémité de la barre de torsion (168) étant reliée de manière mécaniquement fonctionnelle au moteur (28) et étant entraînée par celui-ci par l'intermédiaire de l'embrayage (144).

5. Système d'entraînement d'hélice d'aéronef (100) selon la revendication 4, dans lequel le carter (202) est relié de manière fixe en rotation à l'élément entraîné (146) de l'embrayage (144) ; et est relié de manière fixe en rotation à la première extrémité de la barre de torsion (168) par l'intermédiaire de l'élément entraîné (146).

6. Système d'entraînement d'hélice d'aéronef (100) selon la revendication 5, comprenant en outre un arbre creux (160) reliant l'élément entraîné (146) de l'embrayage (144) à la première extrémité de la barre de torsion (168) ; et
dans lequel la barre de torsion (168) est disposée au moins partiellement à l'intérieur de l'arbre creux (160).

7. Système d'entraînement d'hélice d'aéronef (100) selon l'une quelconque des revendications 4 à 6, dans lequel la barre de torsion (168), l'arbre de sortie (102), l'amortisseur hydraulique (200) et l'embrayage (144) sont coaxiaux.

8. Système d'entraînement d'hélice d'aéronef (100) selon l'une quelconque des revendications 2 à 7, dans lequel :
le carter (202) de l'amortisseur hydraulique (200) comporte une pluralité de bras internes (230) s'étendant radialement vers l'intérieur ;
le moyeu (204) comporte une pluralité de bras externes (244) s'étendant radialement vers l'extérieur ;
les bras externes (244) sont disposés entre les bras internes (230) ; et
une pluralité de chambres principales (246A, 246B) sont définies entre les bras externes (244) et les bras internes (230).

9. Système d'entraînement d'hélice d'aéronef (100) selon la revendication 8, dans lequel :
chaque bras externe de la pluralité de bras externes (244) définit :
une chambre intermédiaire (304) ;
une première ouverture (306A) dans un premier côté (300A) du bras externe à l'avant du premier côté (300A), la première ouverture (306A) reliant de manière fluidique une première chambre principale (246A) de la pluralité de chambres principales (246A, 246B) à la chambre intermédiaire (304), la première chambre principale (246A) étant adjacente au premier côté (300A) du bras externe ; et
une seconde ouverture (306B) dans un second côté (300B) du bras externe à l'arrière du second côté (300B), la seconde ouverture (306B) reliant de manière fluidique une seconde chambre principale (246B) de la pluralité de chambres principales (246A, 246B) avec la chambre intermédiaire (304), la seconde chambre principale (246B) étant adjacente au second côté (300B) du bras externe ;
pour chaque bras externe :
un piston (322) est disposé dans la chambre intermédiaire (304) de manière axiale entre la première et la seconde ouverture (306B),
en réponse à la rotation du moyeu (204) dans une première direction (350) par rapport au carter (202) :
le fluide hydraulique s'écoulant de la première chambre principale (246A) dans la chambre intermédiaire (304) par l'intermédiaire de la première ouverture (306A) ;
le piston (322) se déplaçant vers l'arrière ; et
le fluide hydraulique s'écoulant de la chambre intermédiaire (304) vers la seconde chambre principale (246B) par l'intermédiaire de la seconde ouverture (306B) ; et
en réponse à la rotation du moyeu (204) dans une seconde direction (352) par rapport au carter (202) :
le fluide hydraulique s'écoulant de la seconde chambre principale (246B) dans la chambre intermédiaire (304) par l'intermédiaire de la seconde ouverture (306B) ;
le piston (322) se déplaçant vers l'avant ; et
le fluide hydraulique s'écoulant de la chambre intermédiaire (304) dans la première chambre principale (246A) par l'intermédiaire de la première ouverture (306A).

10. Système d'entraînement d'hélice d'aéronef (100) selon la revendication 9, dans lequel, pour chaque bras externe :
en réponse à la rotation du moyeu (204) dans la première direction (350) par rapport au carter (202) et en réponse au piston (322) atteignant une position d'arrêt arrière :
l'écoulement du fluide hydraulique entrant et sortant de la chambre intermédiaire (304) s'arrête ou se réduit ; et
le fluide hydraulique s'écoulant de la première chambre principale (246A) à la seconde chambre principale (246B) par l'intermédiaire d'au moins un espace (302) entre le bras extérieur et le carter (202), augmentant ainsi le degré d'amortissement de l'amortisseur hydraulique (200) ; et
en réponse à la rotation du moyeu (204) dans la seconde direction (352) par rapport au carter (202) et en réponse au piston (322) atteignant une position d'arrêt avant :
l'écoulement du fluide hydraulique entrant et sortant de la chambre intermédiaire (304) s'arrête ou se réduit ; et
le fluide hydraulique s'écoulant de la seconde chambre principale (246B) à la première chambre principale (246A) par l'intermédiaire de l'au moins un espace (302) entre le bras externe et le carter (202), augmentant ainsi le degré d'amortissement de l'amortisseur hydraulique (200).

11. Système d'entraînement d'hélice d'aéronef (100) selon la revendication 9 ou 10, comprenant en outre, pour chaque bras externe (244) :
deux ressorts (316, 320) disposés dans la chambre intermédiaire (304), le piston (322) étant disposé entre les deux ressorts (316, 320), et les deux ressorts (316, 320) poussant le piston (322) vers le milieu de la chambre intermédiaire (304).

12. Système d'entraînement d'hélice d'aéronef (100) selon la revendication 8 ou 9, dans lequel, en réponse à la rotation relative entre le carter (202) et le moyeu (204), le fluide hydraulique s'écoule entre les chambres principales (246A, 246B) en s'écoulant par les espaces (302) entre les bras externes (244) et le carter (202).

13. Système d'entraînement d'hélice d'aéronef (100) selon l'une quelconque des revendications 2 à 12, dans lequel l'amortisseur hydraulique (200) comprend en outre une chambre (254) à volume variable reliée de manière fluidique au volume défini entre le carter (202) et le moyeu (204).

14. Système d'entraînement d'hélice d'aéronef (100) selon l'une quelconque des revendications 1 à 13, dans lequel :
l'arbre de sortie (102) est au moins partiellement creux ;
la barre de torsion (168) est disposée au moins partiellement à l'intérieur de l'arbre de sortie (102) ; et
l'arbre de sortie (102) et la barre de torsion (168) sont coaxiaux.

15. Procédé de transmission de puissance d'un moteur à combustion interne intermittente (28) à une hélice (26) d'un aéronef (10), l'hélice (26) étant reliée à un arbre de sortie (102), le procédé comprenant :
l'entraînement de l'arbre de sortie (102) avec le moteur (28) par l'intermédiaire d'une barre de torsion (168), la barre de torsion (168) comportant une première extrémité reliée de manière mécaniquement opérationnelle au moteur (28) et une seconde extrémité reliée à l'arbre de sortie (102), la seconde extrémité étant rotative par rapport à la première extrémité autour d'un axe de torsion (227) selon un angle de torsion ; et
l'amortissement des variations des angles de torsion de la barre de torsion (168) au moins pour les changements des angles de torsion en dehors d'une plage d'angles de torsion à l'aide d'un amortisseur hydraulique (200) relié de manière mécaniquement fonctionnelle entre l'arbre de sortie (102) et la première extrémité de la barre de torsion (168), l'amortissement des variations des angles de torsion de la barre de torsion (168) au moins pour les changements d'angles de torsion en dehors d'une plage d'angles de torsion à l'aide d'un amortisseur hydraulique (200), **caractérisé en ce que** le procédé comprend en outre l'étape suivante consistant à :
fournir un premier degré d'amortissement aux variations des angles de torsion dans la plage des angles de torsion et un second degré d'amortissement aux variations des angles de torsion en dehors de la plage des angles de torsion, le second degré d'amortissement étant supérieur au premier degré d'amortissement.
